# EUROPEAN PATENT SPECIFICATION

(11) **EP 2 551 623 B1**
(45) Date of publication and mention of the grant of the patent: **14.10.2020**
(21) Application number: 12177719.7
(22) Date of filing: 24.07.2012
(51) Int. Cl.: F28D 15/00, F28D 20/00, F28F 1/02

(54) **Close-loop temperature equalization device**
Temperaturausgleichsvorrichtung mit geschlossenem Kreislauf
Dispositif d'égalisation de température en boucle fermée

(30) Priority: 25.07.2011 US 201113189819; 01.08.2011 US 201113195230; 01.08.2011 US 201113195242
(43) Date of publication of application: 30.01.2013
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A1- 1 596 139
- EP-A2- 1 860 388
- JP-A- 2009 162 462
- US-A- 3 648 767

## Description

### (a) Field of the Invention

The present invention utilizes the thermal energy of a natural heat storage body (100) to transmit thermal energy to a heat exchange fluid (104) passing a heat gaining device (101) installed at the bottom of a close-loop temperature equalization device having heat releasing device, and with the cold descending/hot ascending effect of the temperature equalized heat exchange fluid (104) or with the pumping performed by an auxiliary fluid pump, the heat exchange fluid (104) in the heat gaining device (101) is enabled to flow through a heat releasing device (201) and a pipeline structure (401) through a pipeline structure (301), then flow back to the heat gaining device (101) for forming a close-loop flow circulation, and by the heat releasing device (201) performing the heat releasing operation to a temperature differentiation body (103) in omni-direction or in a preset direction, so as the thermal energy can be transmitted to the solid, liquid or gaseous temperature differentiation body (103) to be received with the releasing heat, or to the temperature differentiation body (103) structured by the internal or external space of a building.

### (b) Description of the Prior Art

The thermal energy of a natural heat storage body often utilizes a close-loop temperature equalization device with the heat exchange fluid serving as a carrier for transmitting thermal energy to an external temperature differentiation body, said operation is often defined as a passive operation of close-loop pipeline structure, and interfaces for observation and maintenance are not provided, and an active type auxiliary device is not installed for jointly operate.

EP 1596139 A1 discloses a natural thermo-carrier heat release system that provides open or closed temperature regulation on an object with temperature delta to receive the heat release based on the work principle of descending of a flow at lower temperature and ascending at higher temperature of a fluid.

EP 1860388 A2 discloses a temperature equalization system comprised of a heat equalizer and fluid transmission duct disposed in a heat carrier existing in solid or liquid state, the fluid passes through the installation to regulate for temperature equalization, and flows back to the installation disposed in the natural carrier to provide the function of temperature equalization regulating on the backflow.

US 3,648,767 discloses an apparatus for extraction of heat from selected matter by circulating a coolant in a heat-exchanging relationship with the matter as well as to a removed region where the coolant material is cooled. The enclosure shape is divided into a heat rise and cold drop sections such that a coolant filling the enclosure will maintain a circulatory, heat-exchanging flow in response to the natural heat differential existing between the matter adjacent opposite ends of the enclosure.

JP 2009 162462 A, on which the preamble of claim 1 is based, discloses a circulation type heat pipe including a circulation passage comprising a circulation path arranged such that a length range of one part of the circulation path passes a low temperature part and another length range passes a high temperature path. A working fluid is sealed in the length range of one part in the circulation passage, and a pair of check valves provided on both ends of a chamber of an optional length range passing through the lower temperature part of the circulation passage for regulating a circulation direction of the work fluid in one direction. A height of one liquid level of a length range of a liquid phase portion of the working fluid is set higher than a standard height in a downstream side of the downstream side check valve in the circulation passage, and a height of another liquid level of the length range of the liquid phase portion of the working fluid is set lower than the standard height in an upstream side of the upstream side check valve in the circulation passage.

### SUMMARY OF THE INVENTION

The present invention is to install the close-loop temperature equalization device having heat releasing device structured by single flowpath installed in a natural heat storage body (100) which is constituted by a solid or liquid heat storage body having greater and stable heat storage capacity such as a stratum, ground, lake, pool, river, desert, berg and ocean, for storing thermal energy through the natural heat storage body so as to transmit thermal energy to a heat exchange fluid (104) passing a heat gaining device (101) installed at the bottom of a close-loop temperature equalization device having heat releasing device, and with the cold descending/hot ascending effect of the heat exchange fluid (104) with its temperature being equalized or with the pumping performed by an auxiliary fluid pump, the heat exchange fluid (104) in the heat gaining device (101) is enabled to flow through a pipeline structure (301), a heat releasing device (201) and a pipeline structure (401), then flow back to the heat gaining device (101) for forming a close-loop flow circulation, and by the heat releasing device (201) performing the heat releasing operation in the omni-direction or in a preset direction to the solid, liquid or gaseous temperature differentiation body (103) to be received with the releasing heat, or the temperature differentiation body (103) structured by the internal or external space of a building, and the features thereof include one or more than one of the structural devices illustrated from 1) to 7), including: 1) installing an operation port (111) and a sealing plug (110) at the upper end of the top corner of a close-loop flowpath connected with a fluid inlet/outlet port (2011) formed at a higher location of the heat releasing device (201) and the pipeline structure (401), for filling in or sucking out the heat exchange fluid (104) and serving as interfaces for observation and maintenance; 2) forming an outward-expanding arc-shaped flowpath structure at one or more than one turning locations of the close-type circulation flowpath configured by series-connecting the heat gaining device (101), the pipeline structure (301), the heat releasing device (201) and the pipeline structure (401), for temporally storing a part of the heat exchange fluid (104) and moderating the flow speed of the heat exchange fluid (104) with thermal energy for reducing the flow damping of the close-type circulation flowpath to the heat exchange fluid (104); 3) installing an auxiliary heating/cooling device (115); 4) installing an auxiliary fluid pump (107); 5) installing a heat exchange fluid temperature sensing device (TS201); 6) installing an environment temperature sensing device (TS202); and 7) installing an electric energy control unit (ECU200).

According to a second aspect of the invention, a closed loop heat exchange device comprises: a first heat exchanger (101) for installation in a natural heat storage body (100); a second heat exchanger (201) arranged for heat exchange with a temperature differentiation body (103); and a pipeline structure (401) disposed between the first and second heat exchangers to form a closed loop for circulation of a heat exchange fluid; the closed loop heat exchange device further comprising one or more of the following structural devices:
1. an operation port (111) and a sealing plug (110) installed at an upper end of the closed loop flow path;
2. forming an outward-expanding arc-shaped flow path structure at one or more turning locations of the closed-type circulation flow path for temporarily storing a part of the heat exchange fluid and moderating the flow speed of the heat exchange fluid (104);
3. an auxiliary heating/cooling device (115);
4. an auxiliary fluid pump (107);
5. a heat exchange fluid temperature sensing device (TS201);
6. an environment temperature sensing device (TS202); and
7. an electric energy control unit (ECU200).

### BRIEF DESCRIPTION OF THE DRAWINGS

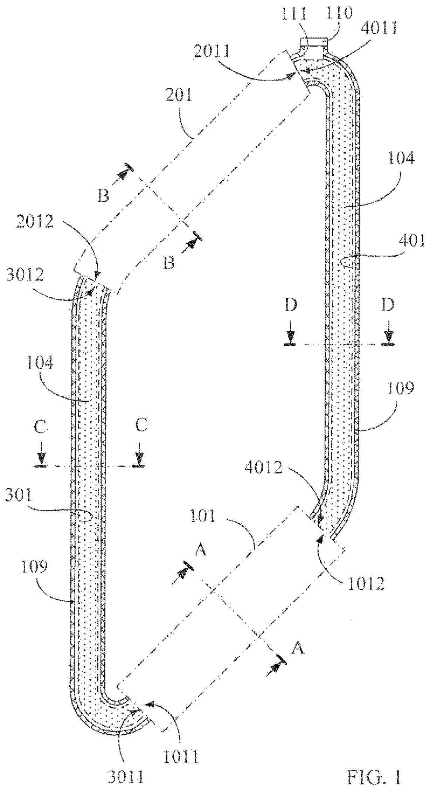

FIG. 1 is a lateral structural view showing the close-loop temperature equalization device being installed with an operation hole (111) and a sealing plug (110) at the upper end of the top corner of a close-type flowpath, according to the present invention.

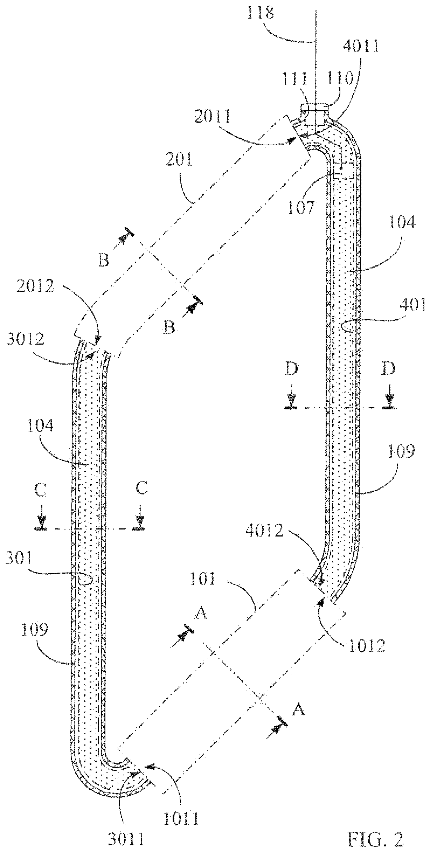

FIG. 2 is a lateral structural view showing the embodiment illustrated in FIG. 1 being installed with an auxiliary fluid pump, according to the present invention.

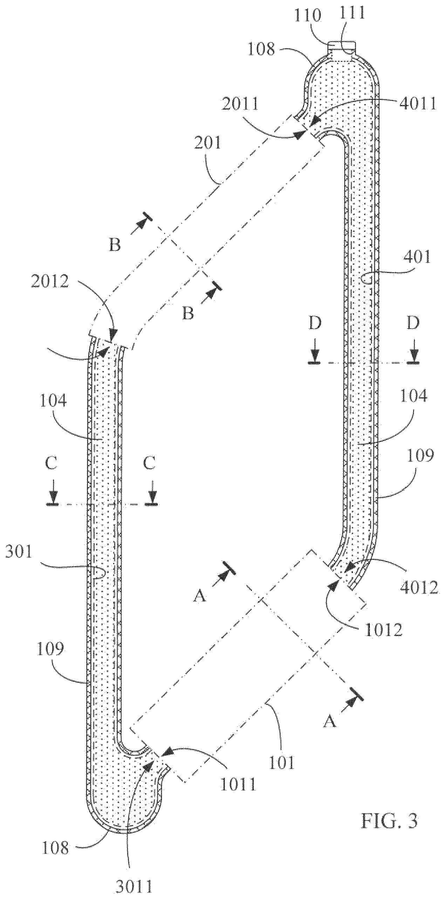

FIG. 3 is a lateral structural view showing the embodiment illustrated in FIG. 1, wherein the upper end of the top corner of the close-type flowpath being installed with an outward-expanding arc-shaped fluid chamber (108), and being provided with the operation port (111) and the sealing plug (110) thereon, according to the present invention.

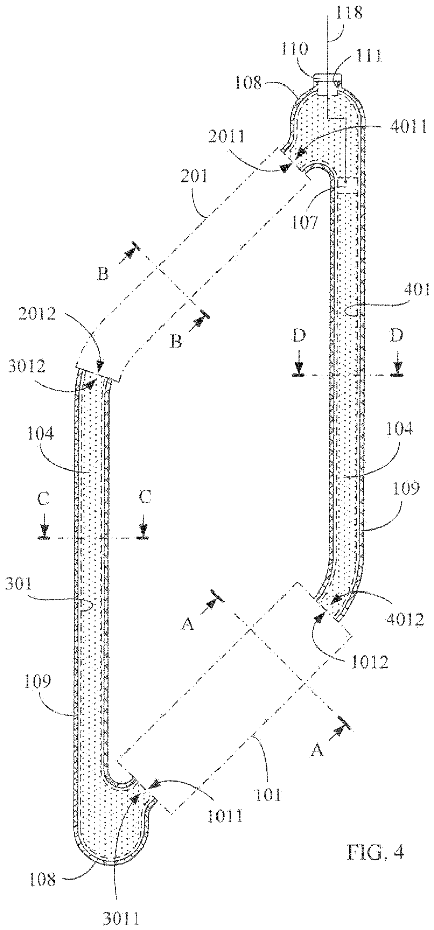

FIG. 4 is a lateral structure view showing the embodiment illustrated in FIG.1 being installed with the auxiliary fluid pump (107) and being installed with the outward-expanding arc-shaped fluid chamber (108) and the operation port (111) and the scaling plug (110) at the top end of the corner part of the close-type flowpath.

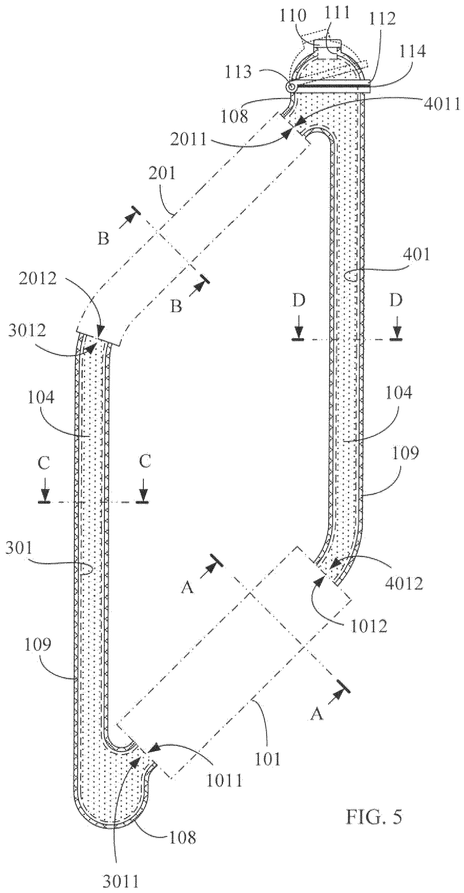

FIG. 5 is a lateral structural view showing the embodiment illustrated in FIG. 1 being installed with the outward-expanding arc-shaped fluid chamber (108) at the upper end of the top corner of the close-type flowpath, and the outward-expanding arc-shaped fluid chamber (108) disposed at the topmost being installed with the top cover (112) capable of being opened or tightly engaged, the hinge (113), the sealing ring (114), and having the sealing plug (110) and the operation port (111) installed at the upper end of the top cover, according to the present invention.

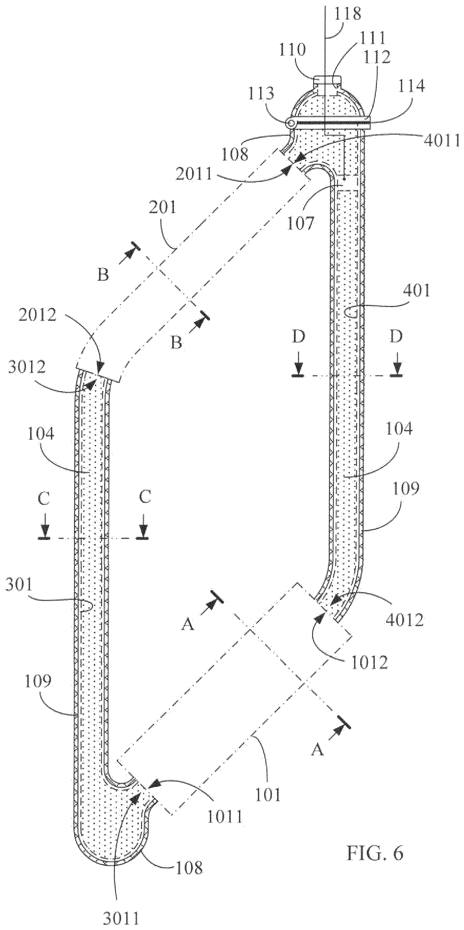

FIG. 6 is a lateral structural view showing the embodiment illustrated in FIG. 1 being installed with the auxiliary fluid pump and installed with the outward-expanding arc-shaped fluid chamber (108) at the upper end of the top corner of the close-type flowpath, and the outward-expanding arc-shaped fluid chamber (108) disposed at the topmost being further installed with the top cover (112) capable of being opened or tightly engaged, the hinge (113), the sealing ring (114), and having the sealing plug (110) and the operation port (111) installed at the upper end of the top cover, according to the present invention.

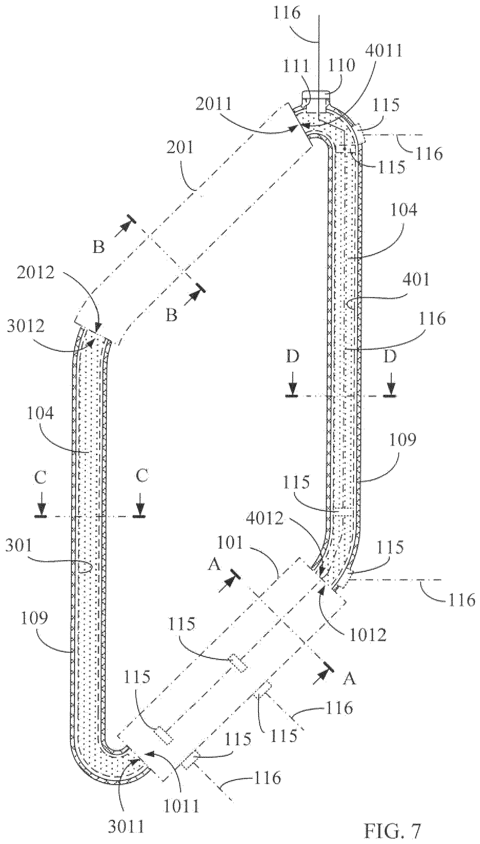

FIG. 7 is a lateral structural view showing the cross section of FIG. 1 wherein the interior or exterior of the flowpath segment configured by the heat gaining device (101) and the pipeline structure (401) being installed with the auxiliary heating/cooling device (115), according to the present invention.

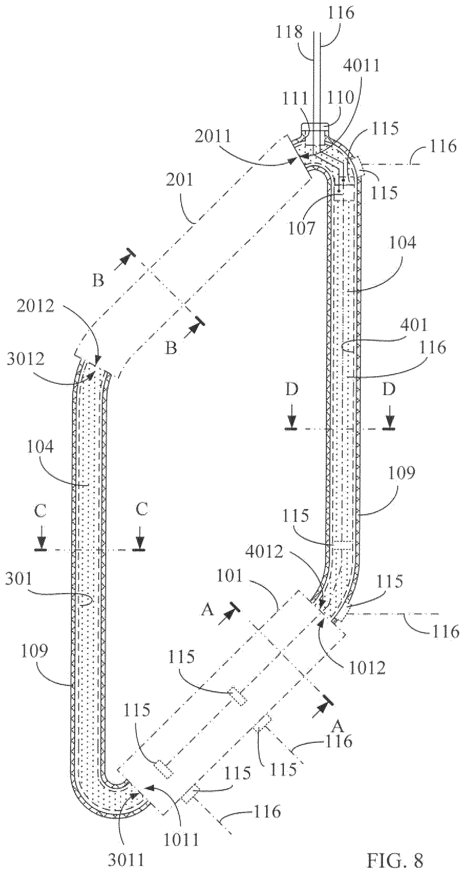

FIG. 8 is a lateral structural view showing the cross section of FIG. 2 wherein the interior of the flowpath segment configured by the heat gaining device (101) and the pipeline structure (401) being installed with the auxiliary fluid pump (107), and the interior or the exterior being installed with the auxiliary heating/cooling device (115), according to the present invention.

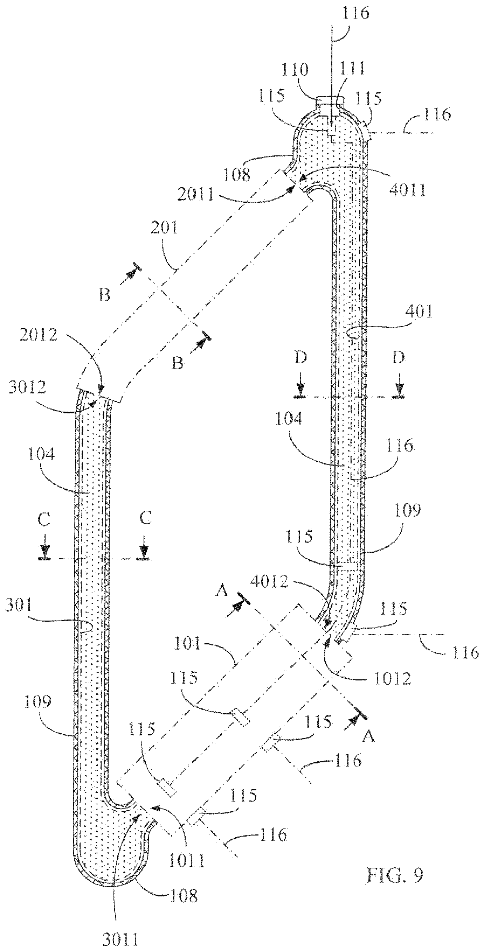

FIG. 9 is a lateral structural view showing the cross section of FIG.3 wherein the interior or exterior of the flowpath segment configured by the heat gaining device (101) and the pipeline structure (401) being installed with the auxiliary heating/cooling device (115), according to the present invention.

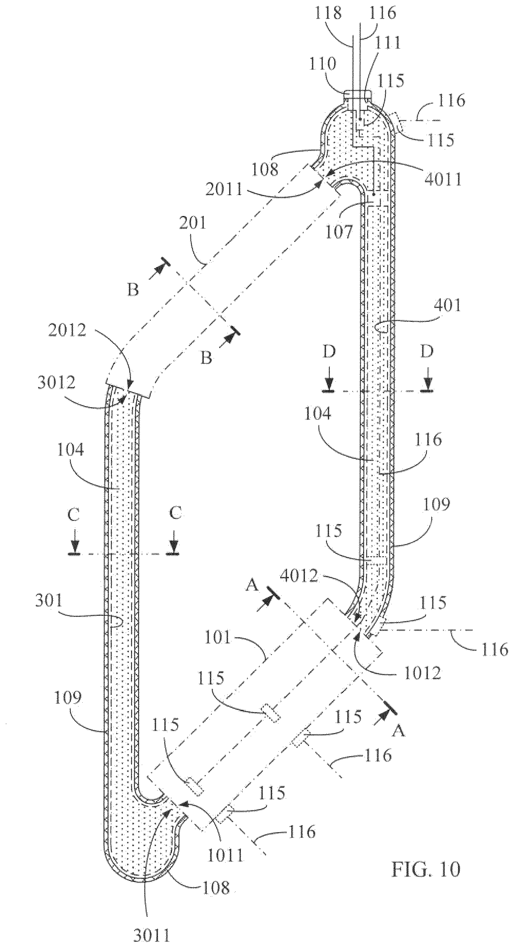

FIG. 10 is a lateral structural view showing the cross section of FIG. 4 wherein the interior of the flowpath segment configured by the heat gaining device (101) and the pipeline structure (401) being installed with the auxiliary fluid pump (107), and the interior or the exterior being installed with the auxiliary heating/cooling device (115), according to the present invention.

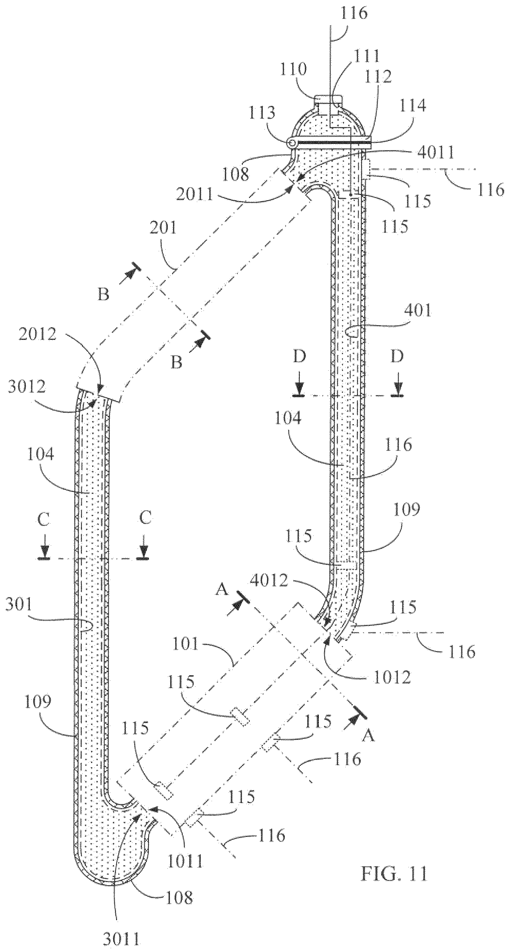

FIG. 11 is a lateral structural view showing the cross section of FIG. 5 wherein the interior or exterior of the flowpath segment configured by the heat gaining device (101) and the pipeline structure (401) being installed with the auxiliary heating/cooling device (115), according to the present invention.

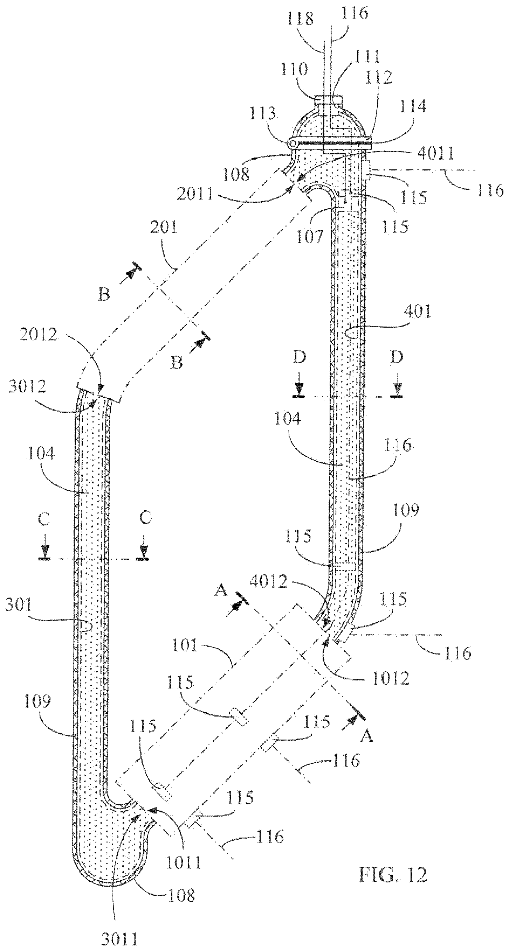

FIG. 12 is a lateral structural view showing the cross section of FIG. 6 wherein the interior of the flowpath segment configured by the heat gaining device (101) and the pipeline structure (401) being installed with the auxiliary fluid pump (107), and the interior or the exterior being installed with the auxiliary heating/cooling device (115), according to the present invention.

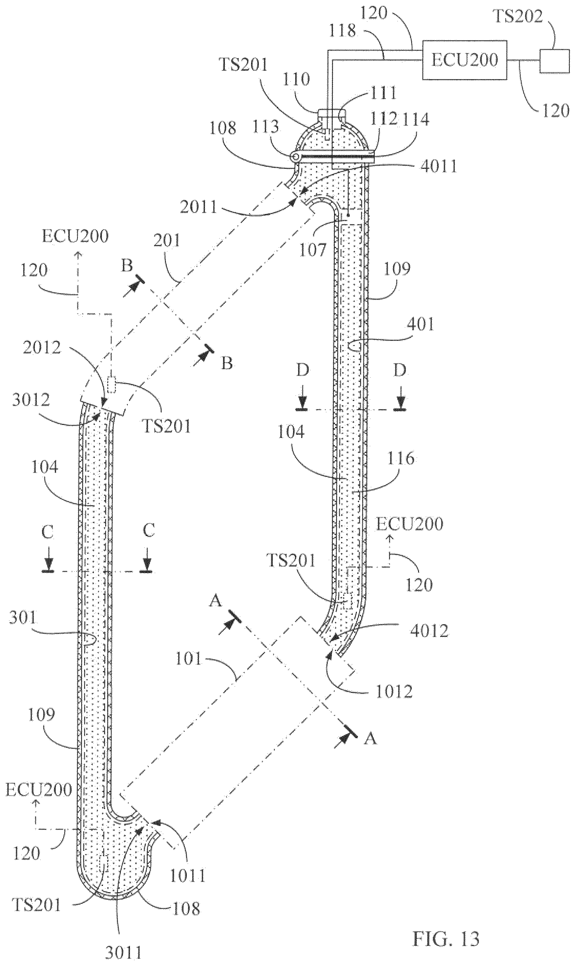

FIG. 13 is a schematic view showing the present invention being installed with the electric power control unit (ECU200), the heat exchange fluid temperature detecting device (TS201) and the environment temperature detecting device (TS202) for controlling the auxiliary fluid pump (107).

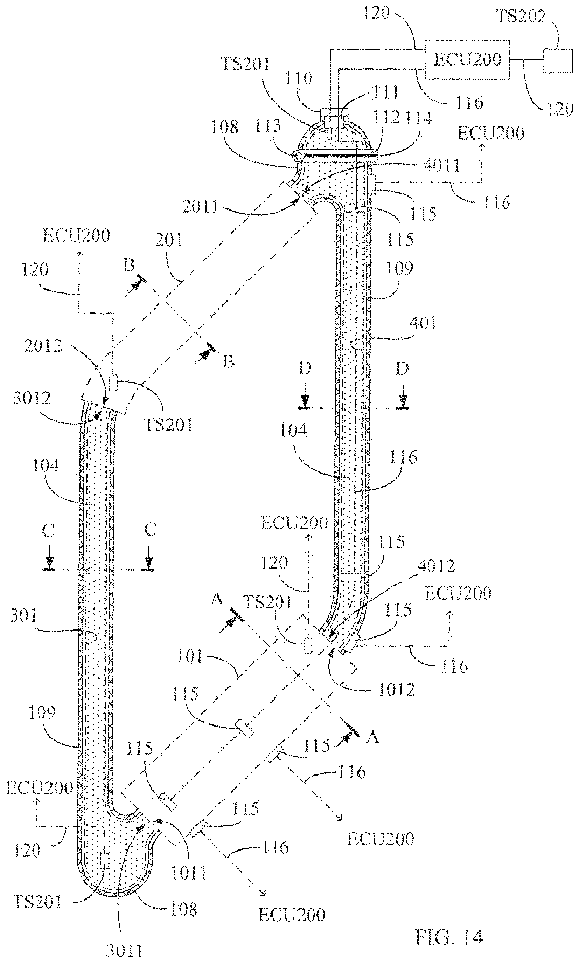

FIG. 14 is a schematic view showing the present invention being installed with the electric power control unit (ECU200), the heat exchange fluid temperature detecting device (TS201) and the environment temperature detecting device (TS202) for controlling the auxiliary heating/cooling device (115).

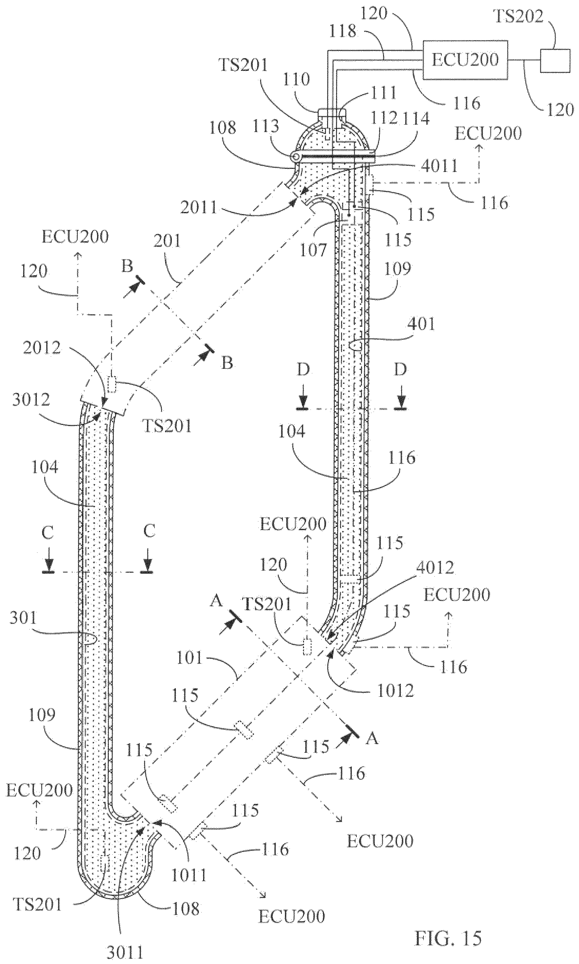

FIG. 15 is a schematic view showing the present invention being installed with the electric power control unit (ECU200), the heat exchange fluid temperature detecting device (TS201) and the environment temperature detecting device (TS202) for controlling the auxiliary fluid pump (107) and the auxiliary heating/cooling device (115).

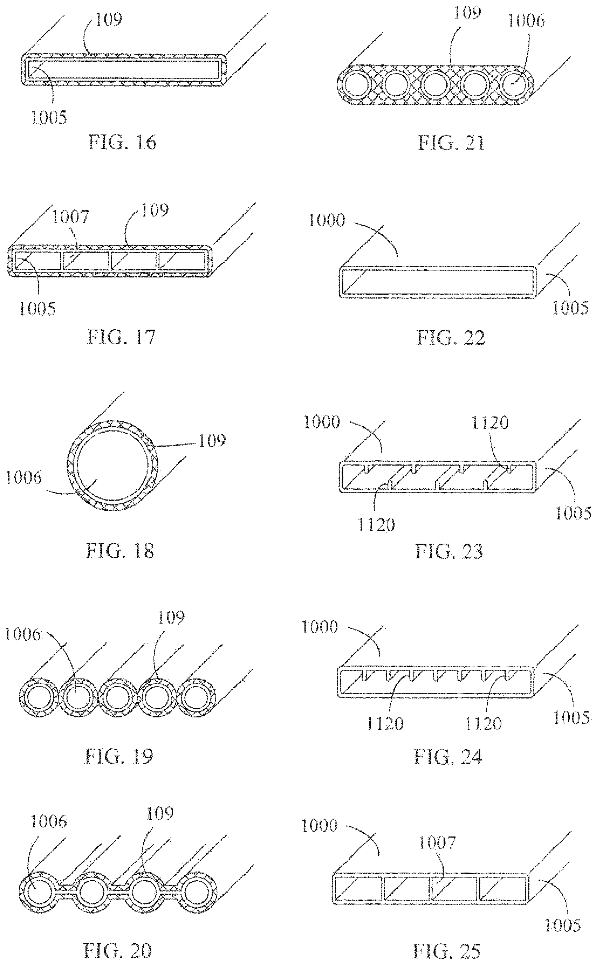

FIG. 16 is a cross sectional view of a rectangular pipeline (1005) made of a heat conductive material, wherein the exterior being covered by the heat insulation member and the interior being hollow.
FIG. 17 is a cross sectional view of a rectangular pipeline (1005) made of a heat conductive material, wherein the exterior being covered by the heat insulation member and the interior being formed with a partitioned flowpath structure (1007).
FIG. 18 is a cross sectional view of a round pipeline structure (1006) made of a heat conductive material, wherein the interior being hollow and the exterior being covered by the heat insulation member.
FIG. 19 is a cross sectional view of a round pipeline structure (1006) made of a heat conductive material and having one or more than one flowpaths, wherein the exterior of each flowpath of round pipeline structure (1006) being covered by the heat insulation member then arranged in parallel to form a multiple flowpath structure.
FIG. 20 is a cross sectional view of a round pipeline structure (1006) having one or more than one flowpaths of round pipeline structures and made of a heat conductive material, wherein each flowpath of round pipeline structure (1006) being arranged in parallel and formed in multiple flow-paths and connected by a connection structure then jointly being covered by a heat insulation member so as to form a multiple flowpath structure.
FIG. 21 is a cross sectional view of a round pipeline structure (1006) having one or more than one paths of round pipeline structures and made of a heat conductive material, wherein each flowpath of round pipeline structure (1006) being spaced with intervals then jointly covered by a heat insulation member so as to form a multiple flowpath structure.
FIG. 22 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a hollow flowpath structure.
FIG. 23 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a staggered thermal conductive fin sheet (1120) structure.
FIG. 24 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with the thermal conductive fin sheet (1120) structure at single side.
FIG. 25 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a partitioned flowpath structure (1007).

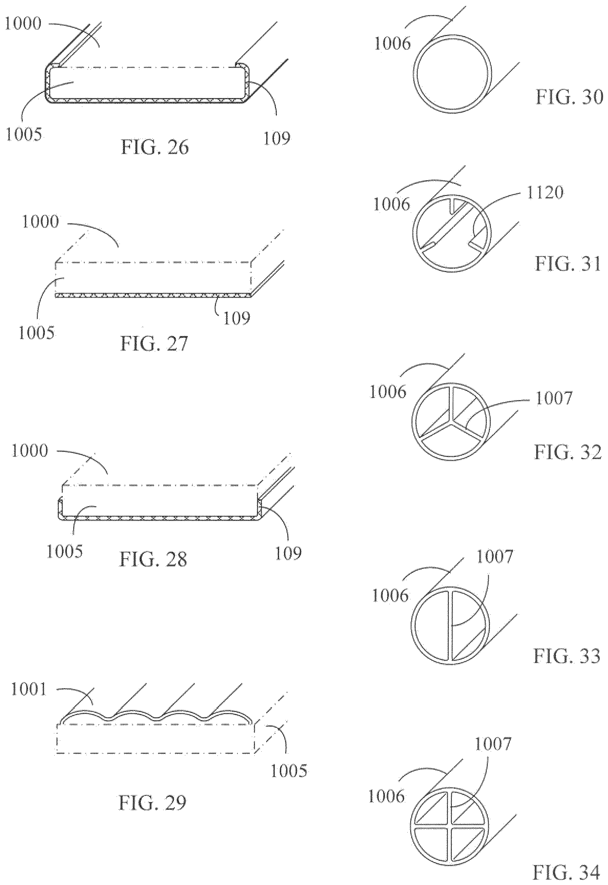

FIG. 26 is a cross sectional view showing the heat insulation member (109) covering the back side of the surface opposite to the planar thermal energy transmitting surface (1000) and the two lateral sides of the rectangular pipeline structure shown from FIG. 22 to FIG. 25.
FIG. 27 is a cross sectional view showing the heat insulation member (109) covering the back side of the surface opposite to the planar thermal energy conductive surface (1000) of the rectangular pipeline structure shown from FIG. 22 to FIG. 25.
FIG. 28 is a cross sectional view showing the heat insulation member (109) covering the back side of the surface opposite to the planar thermal energy conductive surface (1000) as well as a part of the two lateral sides of the rectangular pipeline structure shown from FIG. 22 to FIG. 25.
FIG. 29 is a cross sectional view showing the planar thermal energy transmitting surface (1000) being further formed in a wave-like thermal energy transmitting surface (1001) along the transversal cross section of the fluid flowing direction.
FIG. 30 is a cross sectional view showing the round pipeline structure (1006) made of a heat conductive material, wherein the pipeline is in round or similar shapes and the interior being formed with a hollow structure.
FIG. 31 is a cross sectional view showing the round pipeline structure (1006) made of a heat conductive material, wherein the pipeline is in round or similar shapes and the interior being formed with a structure wherein the thermal conductive fin sheets (1120) radially spaced with three equal angles and extending towards the center but not in contact with each other.
FIG. 32 is a cross sectional view showing the round pipeline structure (1006) made of a heat conductive material, wherein the pipeline is in round or similar shapes and the interior being formed with a the fin-type partitioned flowpath structure (1007) wherein fin sheets radially spaced with three equal angles and extending towards the center for being connected with each other.
FIG. 33 is a cross sectional view showing the round pipeline structure (1006) made of a heat conductive material, wherein the pipeline is in round or similar shapes and the interior being formed with a the fin-type partitioned flowpath structure (1007) wherein fin sheets radially spaced with two equal angles and extending towards the center for being connected with each other.
FIG. 34 is a cross sectional view showing the round pipeline structure (1006) made of a heat conductive material, wherein the pipeline is in round or similar shapes and the interior being formed with a fin-type partitioned flowpath structure (1007) wherein fin sheets radially spaced with four equal angles and extending towards the center for being connected with each other.

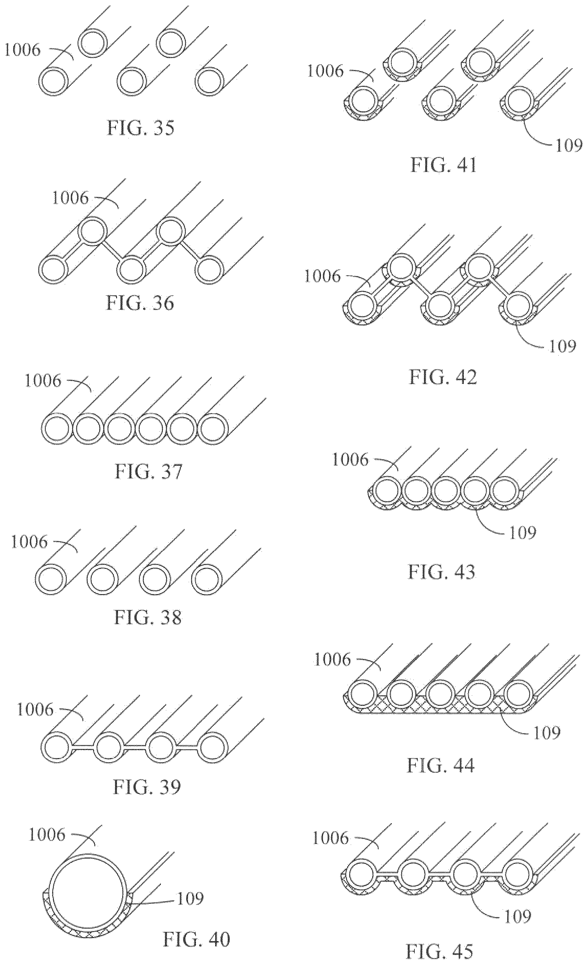

FIG. 35 is a cross sectional view showing the multiple pipeline structure made of a heat conductive material, wherein the multiple pipelines being up/down staggeredly separated.
FIG. 36 is a cross sectional view showing the multiple pipeline structure made of a heat conductive material, wherein the multiple pipelines being up/down staggeredly separated and having a connection device between the pipelines.
FIG. 37 is a cross sectional view showing the multiple pipeline structure made of a heat conductive material, wherein the multiple pipelines being linearly and adjacently arranged.
FIG. 38 is a cross sectional view showing the round pipeline structure (1006) made of a heat conductive material, wherein the multiple pipelines being linearly separated.
FIG. 39 is a cross sectional view showing the round pipeline structure (1006) made of a heat conductive material, wherein the multiple pipelines being linearly separated and a connection structure being provided between the pipelines.
FIG. 40 is a cross sectional view showing the single pipeline structure being made of a heat conductive material, wherein a part of the pipeline surface being exposed externally and the other part being covered by the heat insulation member (109).
FIG. 41 is a cross sectional view showing the multiple pipeline structure made of a heat conductive material, wherein the multiple pipelines being up/down staggeredly separated, a part of each pipeline surface being exposed externally and the other part being covered by the heat insulation member (109).
FIG. 42 is a cross sectional view showing the multiple pipeline structure made of a heat conductive material, wherein the multiple pipelines being up/down staggeredly separated and a connection structure being provided between the pipelines, a part of each pipeline surface being exposed externally and the other part being covered by the heat insulation member (109).
FIG. 43 is a cross sectional view showing the multiple pipeline structure made of a heat conductive material, wherein the multiple pipelines being linearly and adjacently arranged, a part of each pipeline surface being exposed externally and the other part being covered by the heat insulation member (109).
FIG. 44 is a cross sectional view showing the round pipeline structure (1006) made of a heat conductive material, wherein the multiple pipelines being linearly separated, a part of each pipeline surface being exposed externally and the other part being covered by the heat insulation member (109).
FIG. 45 is a cross sectional view showing the round pipeline structure (1006) made of a heat conductive material, wherein the multiple pipelines being linearly separated and a connection structure being provided between the pipelines, a part of each pipeline surface being exposed externally and the other part being covered by the heat insulation member (109).

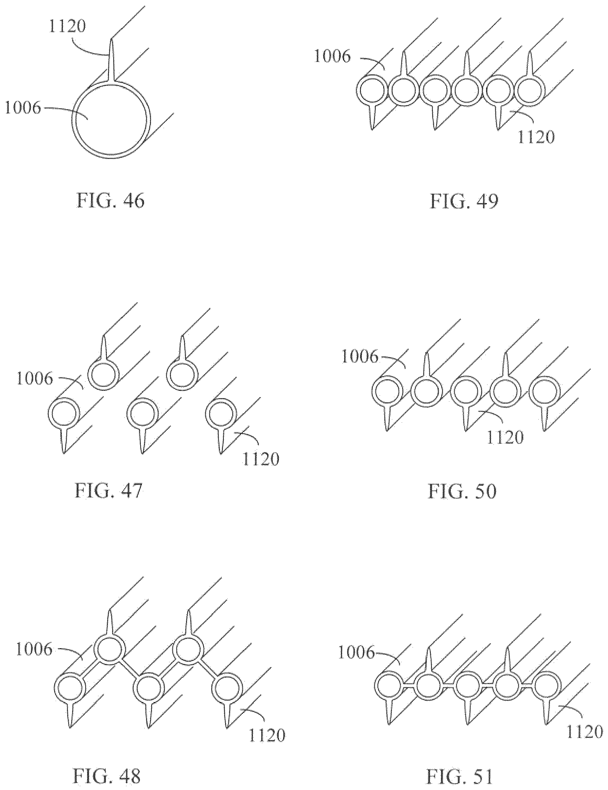

FIG. 46 is a cross sectional view showing the single pipeline structure being made of a heat conductive material and the exterior of the thermal energy transmitting surface being installed with a thermal conductive fin sheet (1120).
FIG. 47 is a cross sectional view showing the multiple pipeline structure made of a heat conductive material, wherein the multiple pipelines being up/down staggeredly separated and the exterior of each thermal energy transmitting surface being installed with a thermal conductive fin sheet (1120).
FIG. 48 is a cross sectional view showing the multiple pipeline structure made of a heat conductive material, wherein the multiple pipelines being up/down staggeredly separated and having a connection structure between each pipeline and the exterior of each thermal energy transmitting surface being installed with a thermal conductive fin sheet (1120).
FIG. 49 is a cross sectional view showing the multiple pipeline structure made of a heat conductive material, wherein the multiple pipelines being linearly and adjacently arranged and the exterior of each thermal energy transmitting surface being installed with a thermal conductive fin sheet (1120).
FIG. 50 is a cross sectional view showing the round pipeline structure (1006) made of a heat conductive material, wherein the multiple pipelines being linearly separated and the exterior of each thermal energy transmitting surface being installed with a thermal conductive fin sheet (1120).
FIG. 51 is a cross sectional view showing the round pipeline structure (1006) made of a heat conductive material, wherein the multiple pipelines being linearly separated and a connection structure being provided between each pipeline and the exterior of each thermal energy transmitting surface being installed with a thermal conductive fin sheet (1120).

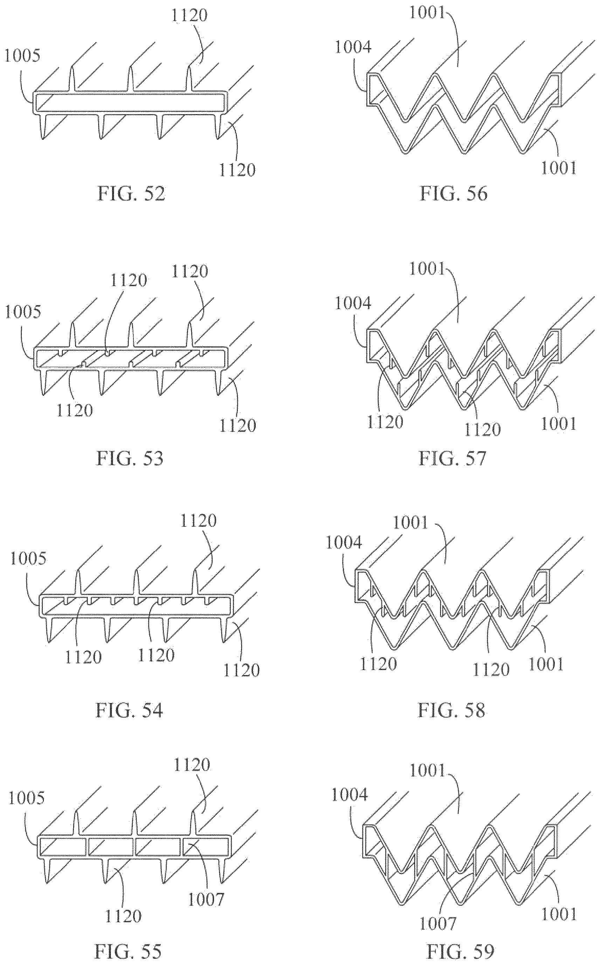

FIG. 52 is a cross sectional view of a rectangular pipeline (1005) made of a heat conductive material, wherein the exterior of the thermal energy transmitting surface being installed with thermal conductive fin sheets (1120) and the interior thereof being in a hollow structure.
FIG. 53 is a cross sectional view of a rectangular pipeline (1005) made of a heat conductive material, wherein the exterior of the thermal energy transmitting surface being installed with thermal conductive fin sheets (1120) and the interior thereof being formed with a staggered thermal conductive fin sheet (1120) structure.
FIG. 54 is a cross sectional view of a rectangular pipeline (1005) made of a heat conductive material, wherein the exterior of the thermal energy transmitting surface being installed with thermal conductive fin sheets (1120) and the interior thereof being formed with a thermal conductive fin sheet (1120) structure at single side.
FIG. 55 is a cross sectional view of a rectangular pipeline made of a heat conductive material, wherein the exterior of the thermal energy transmitting surface being installed with thermal conductive fin sheets (1120), and the interior thereof being formed with a partitioned flowpath structure (1007).
FIG. 56 is a cross sectional view of a W-shaped pipeline (1004) made of a heat conductive material, wherein the wider top and bottom surfaces being formed with wave-shaped thermal energy transmitting surfaces (1001) serving as heat releasing surfaces or heat gaining surfaces and the interior thereof being formed with a hollow structure.
FIG. 57 is a cross sectional view of a W-shaped pipeline (1004) made of a heat conductive material, wherein the wider top and bottom surfaces being formed with wave-shaped thermal energy transmitting surfaces (1001) serving as heat releasing surfaces or heat gaining surfaces and the interior thereof being formed with a staggered thermal conductive fin sheet (1120) structure.
FIG. 58 is a cross sectional view of a W-shaped pipeline (1004) made of a heat conductive material, wherein the wider top and bottom surfaces being formed with wave-shaped thermal energy transmitting surfaces (1001) serving as heat releasing surfaces or heat gaining surfaces and the interior thereof being formed with a thermal conductive fin sheet (1120) structure at single side.
FIG. 59 is a cross sectional view of a W-shaped pipeline (1004) made of a heat conductive material, wherein the exterior thereof being formed with wave-shaped thermal energy transmitting surfaces (1001) for being served as the heat gaining surfaces, and the interior thereof being formed with a partitioned flowpath structure (1007).

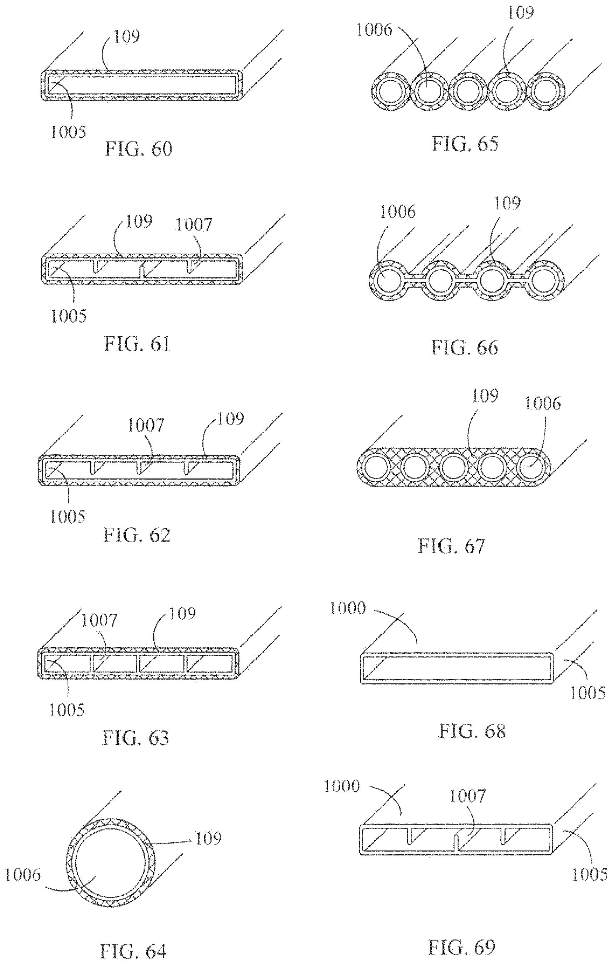

FIG. 60 is a cross sectional view of a rectangular pipeline (1005) made of a heat conductive material, wherein the exterior being covered by the heat insulation member and the interior being hollow.
FIG. 61 is a cross sectional view of a rectangular pipeline (1005) made of a heat conductive material, wherein the exterior being covered by the heat insulation member and the interior being formed with a staggered semi-partitioned structure.
FIG. 62 is a cross sectional view of a rectangular pipeline (1005) made of a heat conductive material, wherein the exterior being covered by the heat insulation member and the interior being formed with a semi-partitioned structure at single side.
FIG. 63 is a cross sectional view of a rectangular pipeline (1005) made of a heat conductive material, wherein the exterior being covered by the heat insulation member and the interior being formed with a partitioned structure (1007).
FIG. 64 is a cross sectional view of a round pipeline structure (1006) made of a heat conductive material, wherein the interior being hollow and the exterior being covered by the heat insulation member.
FIG. 65 is a cross sectional view of a round pipeline structure (1006) made of a heat conductive material and having one or more than one flowpaths, wherein the exterior of each flowpath of round pipeline structure being covered by the heat insulation member then arranged in parallel to form a multiple flowpath structure.
FIG. 66 is a cross sectional view of a round pipeline structure (1006) having one or more than one flowpaths of round pipeline structures and made of a heat conductive material wherein each flowpath of round pipeline structure being arranged in parallel and formed in multiple flowpaths and connected by a connection structure then jointly being covered by a heat insulation member so as to form a multiple fiowpath structure.
FIG. 67 is a cross sectional view of a round pipeline structure (1006) having one or more than one paths of round pipeline structures and made of a heat conductive material wherein each flowpath of round pipeline structure being spaced with intervals then jointly covered by a heat insulation member so as to form a multiple flowpath structure.
FIG. 68 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a hollow flowpath structure.
FIG. 69 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a staggered semi-partitioned flowpath structure.

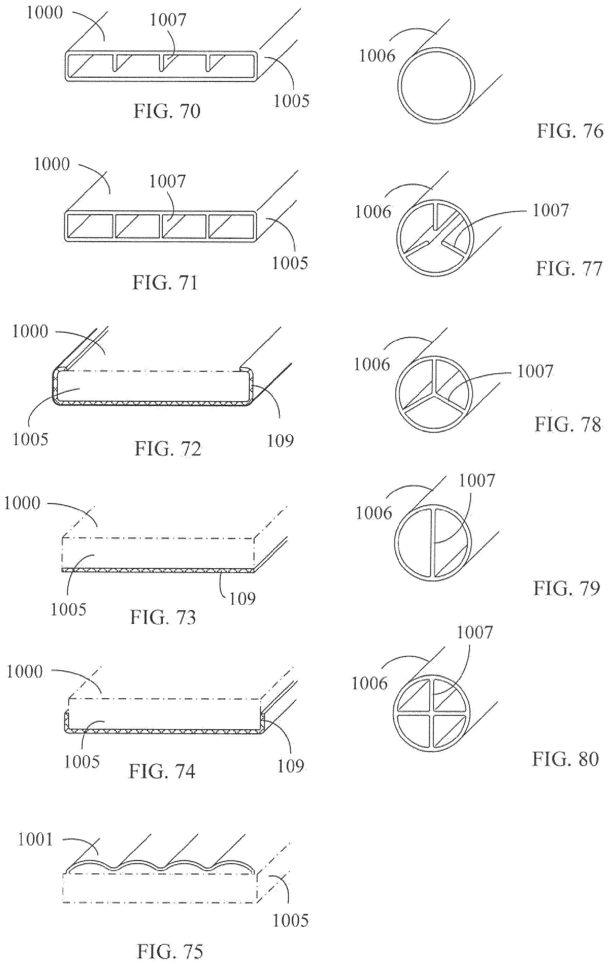

FIG. 70 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a semi-partitioned flowpath structure at single side.
FIG. 71 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a partitioned flowpath structure (1007).
FIG. 72 is a cross sectional view showing the heat insulation member (109) covering the bottom and two lateral sides of the planar thermal energy transmitting surface (1000) of the rectangular pipeline structure shown from FG. 68 to FIG. 71.
FIG. 73 is a cross sectional view showing the heat insulation member (109) covering the back side of the surface opposite to the planar thermal energy conductive surface (1000) of the rectangular pipeline structure shown from FIG. 68 to FIG. 71.
FIG. 74 is a cross sectional view showing the heat insulation member (109) covering the back side of the surface opposite to the planar thermal energy conductive surface (1000) as well as a part of the two lateral sides of the rectangular pipeline structure shown from FIG. 68 to FIG. 71.
FIG. 75 is a cross sectional view showing the planar thermal energy transmitting surface (1000) being further made in a wave-shaped thermal energy transmitting surface (1001) along the transversal cross section of the fluid flowing direction.
FIG. 76 is a cross sectional view showing the round pipeline structure (1006) made of a heat conductive material, wherein the pipeline is in round or similar shapes and the interior being formed with a hollow structure.
F)G. 77 is a cross sectional view showing the round pipeline structure (1006) made of a heat conductive material, wherein the pipeline is in round or similar shapes and the interior being formed with the fin-type partitioned flowpath structure (1007) wherein fin sheets radially spaced with three equal angles and extending towards the center but not in contact with each other.
FIG. 78 is a cross sectional view showing the round pipeline structure (1006) made of a heat conductive material, wherein the pipeline is in round or similar shapes and the interior being formed with the fin-type partitioned flowpath structure (1007) wherein fin sheets radially spaced with three equal angles and extending towards the center for being connected with each other.
FIG. 79 is a cross sectional view showing the round pipeline structure made of a heat conductive material, wherein the pipeline is in round or similar shapes and the interior being formed with the fin-type partitioned flowpath structure (1007) wherein fin sheets radially spaced with two equal angles and extending towards the center for being connected with each other.
FIG. 80 is a cross sectional view showing the round pipeline structure made of a heat conductive material, wherein the pipeline is in round or similar shapes and the interior being formed with the fin-type partitioned flowpath structure (1007) wherein fin sheets radially spaced with four equal angles and extending towards the center for being connected with each other.
FIG. 81 is a cross sectional view showing the multiple pipeline structure made of a heat conductive material, wherein the multiple pipelines being up/down staggeredly separated.
FIG. 82 is a cross sectional view showing the multiple pipeline structure made of a heat conductive material, wherein the multiple pipelines being up/down staggeredly separated and having a connection device between the pipelines.
FIG. 83 is a cross sectional view showing the multiple pipeline structure made of a heat conductive material, wherein the multiple pipelines being linearly and adjacently arranged.
FIG. 84 is a cross sectional view showing the round pipeline structure made of a heat conductive material, wherein the multiple pipelines being linearly separated.
FIG. 85 is a cross sectional view showing the round pipeline structure made of a heat conductive material, wherein the multiple pipelines being linearly separated and a connection structure being provided between the pipelines.
FIG. 86 is a cross sectional view showing the pipeline structure being made of a heat conductive material and a part of the pipeline surface being exposed externally and the other part being covered by the heat insulation member (109).
FIG. 87 is a cross sectional view showing the multiple pipeline structure made of a heat conductive material, wherein the multiple pipelines being up/down staggeredly separated, a part of each pipeline surface being exposed externally and the other part being covered by the heat insulation member (109).
FIG. 88 is a cross sectional view showing the multiple pipeline structure made of a heat conductive material, wherein the multiple pipelines being up/down staggeredly separated and a connection structure being provided between the pipelines, a part of each pipeline surface being exposed externally and the other part being covered by the heat insulation member (109).
FIG. 89 is a cross sectional view showing the multiple pipeline structure made of a heat conductive material, wherein the multiple pipelines being linearly and adjacently arranged, a part of each pipeline surface being exposed externally and the other part being covered by the heat insulation member (109).
FIG. 90 is a cross sectional view showing the round pipeline structure made of a heat conductive material, wherein the multiple pipelines being linearly separated, a part of each pipeline surface being exposed externally and the other part being covered by the heat insulation member (109).
FIG. 91 is a cross sectional view showing the round pipeline structure made of a heat conductive material, wherein the multiple pipelines being linearly separated and a connection structure being provided between the pipelines, a part of each pipeline surface being exposed externally and the other part being covered by the heat insulation member (109).
FIG. 92 is a cross sectional view showing the single pipeline structure being made of a heat conductive material and the exterior of the thermal energy transmitting surface being installed with a thermal conductive fin sheet (1120).
FIG. 93 is a cross sectional view showing the multiple pipeline structure made of a heat conductive material, wherein the multiple pipelines being up/down staggeredly separated and the exterior of each thermal energy transmitting surface being installed with a thermal conductive fin sheet (1120).
FIG. 94 is a cross sectional view showing the multiple pipeline structure made of a heat conductive material, wherein the multiple pipelines being up/down staggeredly separated and having a connection structure between each pipeline and the exterior of each thermal energy transmitting surface being installed with a thermal conductive fin sheet (1120).
FIG. 95 is a cross sectional view showing the multiple pipeline structure made of a heat conductive material, wherein the multiple pipelines being linearly and adjacently arranged and the exterior of each thermal energy transmitting surface being installed with a thermal conductive fin sheet (1120).
FIG. 96 is a cross sectional view showing the round pipeline structure (1006) made of a heat conductive material, wherein the multiple pipelines being linearly separated and the exterior of each thermal energy transmitting surface being installed with a thermal conductive fin sheet (1120).
FIG. 97 is a cross sectional view showing the round pipeline structure (1006) made of a heat conductive material, wherein the multiple pipelines being linearly separated and a connection structure being provided between each pipeline and the exterior of each thermal energy transmitting surface being installed with a thermal conductive fin sheet (1120).
FIG. 98 is a cross sectional view of a rectangular pipeline (1005) made of a heat conductive material, wherein the exterior of the thermal energy transmitting surface being installed with thermal conductive fin sheets (1120) and the interior thereof being hollow.
FIG. 99 is a cross sectional view of a rectangular pipeline (1005) made of a heat conductive material, wherein the exterior of the thermal energy transmitting surface being installed with thermal conductive fin sheets (1120) and the interior thereof being formed with a staggered semi-partitioned flowpath structure.
FIG. 100 is a cross sectional view of a rectangular pipeline (1005) made of a heat conductive material, wherein the exterior of the thermal energy transmitting surface being installed with thermal conductive fin sheets (1120) and the interior thereof being formed with a semi-partitioned flowpath structure at single side.
FIG. 101 is a cross sectional view of a rectangular pipeline (1005) made of a heat conductive material, wherein the exterior of the thermal energy transmitting surface being installed with thermal conductive fin sheets (1120) and the interior thereof being formed with a partitioned flowpath structure (1007).
FIG. 102 is a cross sectional view of a W-shaped pipeline (1004) made of a heat conductive material, wherein the wider top and bottom surfaces being formed with wave-shaped thermal energy transmitting surfaces (1001) serving as heat releasing surfaces or heat gaining surfaces and the interior thereof being formed with a hollow structure.
FIG. 103 is a cross sectional view of a W-shaped pipeline (1004) made of a heat conductive material, wherein the wider top and bottom surfaces being formed with wave-shaped thermal energy transmitting surfaces serving as heat releasing surfaces or heat gaining surfaces and the interior thereof being formed with a staggered semi-partitioned flowpath structure.
FIG. 104 is a cross sectional view of a W-shaped pipeline (1004) made of a heat conductive material, wherein the wider top and bottom surfaces being formed with wave-shaped thermal energy transmitting surfaces (1001) serving as heat releasing surfaces or heat gaining surfaces and the interior thereof being formed with a staggered semi-partitioned flowpath structure at single side.
FIG. 105 is a cross sectional view of a W-shaped pipeline (1004) made of a heat conductive material, wherein the wider top and bottom surfaces being formed with wave-shaped thermal energy transmitting surfaces (1001) serving as heat releasing surfaces or heal gaining surfaces and the interior thereof being formed with a partitioned flowpath structure (1007).
FIG. 106 is a schematic view showing the first example of the applied structure and installation means, according to the preset invention.
FIG. 107 is a schematic view showing the second example of the applied structure and installation means, according to the preset invention.
FIG. 108 is a schematic view showing the third example of the applied structures and installation means, according to the preset invention.
FIG. 109 is a schematic view showing the fourth example of the applied structure and installation means, according to the preset invention.
FIG. 110 is a schematic view showing the fifth example of the applied structure and installation means, according to the preset invention.
FIG. 111 is a schematic view showing the sixth example of the applied structure and installation means, according to the preset invention.
FIG. 112 is a schematic view showing the seventh example of the applied structure and installation means, according to the preset invention.
FIG. 113 is a schematic view showing the eighth example of the applied structure and installation means, according to the preset invention.
FIG. 114 is a schematic view showing the ninth example of the applied structure and installation means, according to the preset invention.

### DESCRIPTION OF MAIN COMPONENT SYMBOLS

- 100 :: Natural heat storage body
- 101 :: Heat gaining device
- 103 :: Temperature differentiation body
- 104 :: Heat exchange fluid
- 107 :: Auxiliary fluid pump
- 108 :: Outward-expanding arc-shaped fluid chamber
- 109 :: Heat insulation member
- 110 :: Sealing plug
- 111 :: Operation port
- 112 :: Top cover
- 113 :: Hinge
- 114 :: Sealing ring
- 115 :: Auxiliary heating/cooling device
- 116, 118:: Power wire
- 120 :: Signal transmission wire
- ECU200 :: Electric power control unit
- TS201 :: Heat exchange fluid temperature detecting device
- TS202 :: Environment temperature detecting device
- 1000 :: Planar thermal energy transmitting surface
- 1001 :: Wave-shaped thermal energy transmitting surface
- 1004 :: W-shaped pipeline
- 1005 :: Rectangular pipeline
- 1006 :: Round pipeline
- 1007 :: Partitioned flowpath structure
- 1120 :: Thermal conductive fin sheet
- 1011, 1012, 2011, 2012 3011, 3012, 4011, 4012 :: Fluid inlet/outlet port
- 201 :: Heat releasing device
- 301, 401 :: Pipeline structure

### DETAILED DESCRIPTION OF THE PREFERRED EMBODIMENTS

The thermal energy of a natural heat storage body often utilizes a close-loop temperature equalization device with the heat exchange fluid serving as a carrier for transmitting thermal energy to an external temperature differentiation body, said operation is often defined as a passive operation of close-loop pipeline structure, and interfaces for observation and maintenance are not provided, and an active type auxiliary device is not installed for jointly operate;
The present invention utilizes the thermal energy of a natural heat storage body (100) to transmit thermal energy to a heat exchange fluid (104) passing a heat gaining device (101) installed at the bottom of a close-loop temperature equalization device, and with the cold descending/hot ascending effect of the temperature equalized heat exchange fluid (104) or with the pumping performed by an auxiliary fluid pump, the heat exchange fluid (104) in the heat gaining device (101) is enabled to flow through a heat releasing device (201) and a pipeline structure (401) through a pipeline structure (301), then flow back to the heat gaining device (101) for forming a close-loop flow circulation, and by the heat releasing device (201) performing the heat releasing operation to a temperature differentiation body (103) in omni-direction or in a preset direction, so as the thermal energy can be transmitted to the solid, liquid or gaseous temperature differentiation body (103) to be received with the releasing heat, or to the temperature differentiation body (103) structured by the internal or external space of a building, and the features thereof include one or more than one of the structural devices illustrated from 1) to 7), including: 1) installing an operation port (111) and a sealing plug (110) at the upper end of the top corner of a close-loop flowpath connected with a fluid inlet/outlet port (2011) formed at a higher location of the heat releasing device (201) and the pipeline structure (401), for filling in or sucking out the heat exchange fluid (104) and serving as interfaces for observation and maintenance; 2) forming an outward-expanding arc-shaped flowpath structure at one or more than one turning locations of the close-type circulation flowpath configured by series-connecting the heat gaining device (101), the pipeline structure (301), the heat releasing device (201) and the pipeline structure (401), for temporally storing a part of the heat exchange fluid (104) and moderating the flow speed of the heat exchange fluid (104) with thermal energy for reducing the flow damping of the close-type circulation flowpath to the heat exchange fluid (104); 3) installing an auxiliary heating/cooling device (115); 4) installing an auxiliary fluid pump (107); 5) installing a heat exchange fluid temperature sensing device (TS201); 6) installing an environment temperature sensing device (TS202); and 7) installing an electric energy control unit (ECU200). The structural features and functions of the present invention are illustrated through embodiments accompanied with drawings, as followings:
FIG. 1 is a lateral structural view showing the close-loop temperature equalization device being installed with an operation hole (111) and a sealing plug (110) at the upper end of the top corner of a close-type flowpath, according to the present invention;
As shown in FIG. 1, the heat gaining device (101) is installed in a natural heat storage body (100) which is constituted by a solid or liquid heat storage body having greater and stable heat storage capacity such as a stratum, ground, lake, pool, river, desert, berg and ocean;
A fluid inlet/output port (1011) of the heat gaining device (101) is connected to the fluid in let/outlet port (2012) of the heat releasing device (201) via the pipeline structure (301), another fluid inlet/outlet port (1012) of the heat gaining device (101) is connected to a fluid inlet/outlet port (2011) of the heat releasing device (201) via the pipeline structure (401) thereby forming a close-loop circulation flowpath, so the heat exchange fluid (104) passing the heat gaining device (101) is enabled to form a close-type circulation flowpath through the pipeline structures (301), (401) and the heat releasing device (201), and the heat releasing device (201) releases the thermal energy to the temperature differentiation body (103) at its periphery being subjected to temperature equalization; according to the close-loop temperature equalization device provided by the present invention, through the heat exchange fluid (104) performing close-loop flow circulation in the close-loop temperature equalization device , the thermal energy of the natural heat storage body (100) and the thermal energy of the temperature differentiation body (103) subjected to temperature equalization are transmitted for temperature equalization; the heat exchange fluid (104) is constituted by a gaseous or liquid fluid having heat storage and thermal conduction properties; the temperature differentiation body (103) is a space or structure configured by gas or solid or liquid for receiving the thermal energy released by the heat exchange fluid passing the heat releasing device (201) during the system operation; Features of main components are as followings:
--Heat gaining device (101): which is made of a material having good heat conductivity, and provided with a flowpath structure configured by one or more than one flowpaths, or structured by a conduit structure configured by one or more than one flowpaths, for being installed in the natural heat storage body (100); two ends of the flowpath of the heat gaining device (101) respectively have a fluid inlet/outlet port (1011), (1012) for being respectively connected to one end of the pipeline structure (301) and one end of the pipeline structure (401), so as to be leaded and connected to the heat releasing device (201) for forming a close-type circulation flowpath, in which the flowpath inside the heat gaining device (101) is inclined with respect to the horizontal level, the fluid inlet/outlet port (1011) at a lower position allows the heat exchange fluid (104) having relatively low temperature to flow in, and the fluid inlet/outlet port (1012) at a higher position allows the heat exchange fluid (104) having relatively high temperature to flow out, so as to facilitate the heat exchange fluid (104) to generate a hot ascending/cold descending effect;
--Heat releasing device (201): which is made of a material having good heat conductivity, and provided with a flowpath structure, or directly structured by a pipeline structure; the exterior of the heat releasing device (201) is served to be in contact with the temperature differentiation body (103), and the thermal energy of the heat exchange fluid (104) passing the heat releasing device (201) is served to perform the heat releasing operation to the temperature differentiation body (103) in omni-direction or in a set direction, the height difference between the fluid inlet/outlet port (2011) and the fluid inlet/outlet port (2012) of the heat releasing device (201) are designed to facilitate or at least has no negative influence to the heat exchange fluid (104) flowing from the heat gaining device (101) to perform the close-loop flow circulation in the close-loop temperature equalization device provided by the present invention by means of the hot ascending/cold descending effect of the fluid;
--Pipeline structure (301): which is constituted by a fluid pipeline structure configured by one or more than one flowpaths in round or other geometric shapes, the pipeline structure (301) is configured by one or more than one following means : 1) configured by a material having good heat conductivity; 2) configured by a material having good heat conductivity, and the exterior of all or part of the pipeline segments is covered by a heat insulation member (109); 3) configured by a pipe-like structure or building structural body made of a material having good heat insulation property; one end of the pipeline structure (301) has one or more than one fluid inlet/outlet ports (3011) for being connected to the fluid inlet/outlet port (1011) of the heat gaining device (101) having one or more than one flowpaths, and the other end of the pipeline structure (301) has one or more than one fluid inlet/outlet ports (3012) for being connected to the fluid inlet/outlet port (2012) of the heat releasing device (201) for transporting the heat exchange fluid (104);
--Pipelitie structure (401): which is constituted by a fluid pipeline structure configured by one or more than one flowpaths in round or other geometric shapes, the pipeline structure (401) is configured by one or more than one following means: 1) configured by a material having good heat conductivity; 2) configured by a material having good heat conductivity, and the exterior of all or part of pipeline segments is covered by a heat insulation member (109); 3) configured by a pipe-like structure or building structural body made of a material having good heat insulation property; one end of the pipeline structure (401) has one or more than one fluid inlet/outlet ports (4012) for being connected to the fluid in let/outlet port (1012) of the heat gaining device (101) having one or more than one flowpaths, and the other end of the pipeline structure (401) has one or more than one fluid inlet/outlet ports (4011) for being connected to the fluid inlet/outlet port (2011) of the heat releasing device (201) for transporting the heat exchange fluid (104);
By installing the scaling plug (110) and the operation port (111) at the upper end of the top comer of the close-type circulation flowpath configured by the heat gaining device (101), the heat releasing device (201), the pipeline structure (301) and the pipeline structure (401), the fluid is enabled to be filled in or sucked out, and observation and maintenance can be carried out;
The mentioned close-loop temperature equalization device includes at least a heat gaining device (101), at least a heat releasing device (201), at least a pipeline structure (301) and at least a pipeline structure (401) in series connection or in series and parallel connection to configure a close-loop flowpath; wherein the heat gaining device (101), the heat releasing device (201), the pipeline structure (301) and the pipeline structure (401) can be integrally formed or assembled by plural components, the dimension and shape at each connecting location for the assembly is in a gradually-altered shape for forming a smooth state, said smooth state can reduce the damping while the fluid is flowing, thereby facilitating the flow circulation of the fluid;
The mentioned close-loop temperature equalization device can be applied to release energy to the gaseous or solid or liquid heat releasing object, such as a road surface, roof, wall, floor of a building, air inside a green house, or air inside a house, or water in a lake, or equipment or structural body desired to be heated for freeze preventing;
The mentioned close-loop temperature equalization device can be further series installed with an auxiliary fluid pump (107) in the close-type circulation flowpath configured by the heat gaining device (101), the heat releasing device (201), the pipeline structure (301) and the pipeline structure (401), so that the close-loop temperature equalization device is not only provided with the circulative flow through the cold descending/hot ascending effect of the heat exchange fluid (104), but also can perform normal-direction fluid pumping in the same direction as the cold descending/hot ascending flow of the fluid exchange fluid (104) through actively operating the auxiliary fluid pump (107), or perform reverse-direction fluid pumping in the direction opposite to the cold descending/hot ascending flow of the fluid exchange fluid (104) through actively operating the auxiliary fluid pump (107), which is illustrated as followings:
FIG. 2 is a lateral structural view showing the embodiment illustrated in FIG. 1 being installed with an auxiliary fluid pump, according to the present invention;
As shown in FIG. 2, the heat gaining device (101) is installed in a natural heat storage body (100) which is constituted by a solid or liquid heat storage body having greater and stable heat storage capacity such as a stratum, ground, lake, pool, river, desert, berg and ocean;
A fluid inlet/output port (1011) of the heat gaining device (101) is connected to the fluid inlet/outlet port (2012) of the heat releasing device (201) via the pipeline structure (301), another fluid inlet/outlet port (1012) of the heat gaining device (101) is connected to a fluid inlet/outlet port (2011) of the heat releasing device (201) via the pipeline structure (401) thereby forming a close-loop circulation flowpath, so the heat exchange fluid (104) passing the heat gaining device (101) is enabled to form a close-type circulation flowpath through the pipeline structures (301), (401) and the heat releasing device (201), and the heat releasing device (201) releases the thermal energy to the temperature differentiation body (103) at its periphery being subjected to temperature equalization; according to the close-loop temperature equalization device provided by the present invention, through the heat exchange fluid (104) performing close-loop flow circulation in the close-loop temperature equalization device, the thermal energy of the natural heat storage body (100) and the thermal energy of the temperature differentiation body (103) subjected to temperature equalization are transmitted for temperature equalization; the heat exchange fluid (104) is constituted by a gaseous or liquid fluid having heat storage and thermal conduction properties; the temperature differentiation body (103) is a space or structure configured by gas or solid or liquid for receiving the thermal energy released by the heat exchange fluid passing the heat releasing device (201) during the system operation;
Features of main components are as followings:
--Auxiliary fluid pump (107): which is constituted by a fluid pump driven by a motor driven by the electric power externally supplied through a power wire (118) or by a fluid pump driven by natural forces, provided for being series connected to the mentioned close-type circulation flowpath for pumping the heat exchange fluid (104); the auxiliary fluid pump (107) includes a fixed single-direction pumping operation, or the pumping direction is selectable, and the operation of ON/OFF, speed changing or the pumping flow amount is being controllable;
The operation function thereof includes: the auxiliary fluid pump (107) is not operated, and the heat exchange fluid (104) circulates due to the cold descending/hot ascending effect; or actively controlling the auxiliary fluid pump (107) to pump in the normal direction for performing auxiliary pumping in the same direction as the cold descending/hot ascending flow direction of the heat exchange fluid (104); or actively controlling the auxiliary fluid pump (107) to pump in the reverse direction for performing reverse pumping in the direction opposite to the cold descending/hot ascending flow direction of the heat exchange fluid (104);
By installing the sealing plug (110) and the operation port (111) at the upper end of the top corner of the close-type circulation flowpath configured by the heat gaining device (101), the heat releasing device (201), the pipeline structure (301) and the pipeline structure (401), the fluid is enabled to be filled in or sucked out, and observation and maintenance can be carried out;
The mentioned close-loop temperature equalization device includes at least a heat gaining device (101), at least a heat releasing device (201), at least a pipeline structure (301) and at least a pipeline structure (401) in series connection or in series and parallel connection to configure a close-loop flowpath; wherein the heat gaining device (101), the heat releasing device (201), the pipeline structure (301) and the pipeline structure (401) can be integrally formed or assembled by plural components, the dimension and shape at each connecting location for the assembly is in a gradually-altered shape for forming a smooth state, said smooth state can reduce the damping while the fluid is flowing, thereby facilitating the flow circulation of the fluid;
According to the present invention, the close-loop temperature equalization device can be further installed with an outward-expanding arc-shaped fluid chamber (108) at the upper end of the top corner of the close-type circulation flowpath configured by the heat gaining device (101), the heat releasing device (201), the pipeline structure (301) and the pipeline structure (401), for lowering the damping of the circulative flow of the heat exchange fluid (104), which is illustrated as followings:
FIG. 3 is a lateral structural view showing the embodiment illustrated in FIG. 1, wherein the upper end of the top corner of the close-type flowpath being installed with an outward-expanding arc-shaped fluid chamber (108), and being provided with the operation port (111) and the scaling plug (110) thereon, according to the present invention;
As shown in FIG. 3, the heat gaining device (101) is installed in a natural heat storage body (100) which is constituted by a solid or liquid heat storage body having greater and stable heat storage capacity such as a stratum, ground, lake, pool, river, desert, berg and ocean;
A fluid inlet/output port (1011) of the heat gaining device (101) is connected to the fluid inlet/outlet port (2012) of the heat releasing device (201) via the pipeline structure (301), another fluid inlet/outlet port (1012) of the heat gaining device (101) is connected to a fluid inlet/outlet port (2011) of the heat releasing device (201) via the pipeline structure (401) thereby forming a close-loop circulation flowpath, so the heat exchange fluid (104) passing the heat gaining device (101) is enabled to form a close-type circulation flowpath through the pipeline structures (301), (401) and the heat releasing device (201), and the heat releasing device (201) releases the thermal energy to the temperature differentiation body (103) at its periphery being subjected to temperature equalization; according to the close-loop temperature equalization device provided by the present invention, through the heat exchange fluid (104) performing close-loop flow circulation in the close-loop temperature equalization device, the thermal energy of the natural heat storage body (100) and the thermal energy of the temperature differentiation body (103) subjected to temperature equalization are transmitted for temperature equalization; the heat exchange fluid (104) is constituted by a gaseous or liquid fluid having heat storage and thermal conduction properties; the temperature differentiation body (103) is a space or structure configured by gas or solid or liquid for receiving the thermal energy released by the heat exchange fluid passing the heat releasing device (201) during the system operation; Features of main components are as followings:
-- Outward-expanding arc-shaped fluid chamber (108): which is constituted by an outward-expanding arc-shaped flowpath structure formed at one or more than one of the turning locations of the close-type circulation flowpath configured by the heat gaining device (101), the heat releasing device (201), the pipeline structure (301) and the pipeline structure (401), for temporally storing a part of the heat exchange fluid (104) and moderating the flow speed of the heat exchange fluid (104) having thermal energy, so as to reduce the flow damping of the close-type circulation flowpath to the heat exchange fluid (104);
By installing the mentioned outward-expanding arc-shaped fluid chamber (108) at the upper end of the top corner of the close-type circulation flowpath configured by the heat gaining device (101), the heat releasing device (201), the pipeline structure (301) and the pipeline structure (401), the damping generated when the heat exchange fluid (104) performs circulative flow can be reduced thereby facilitating the heat exchange, and by installing the sealing plug (110) and the operation port (111) at the upper end of the outward-expanding arc-shaped fluid chamber (108) installed at the turning location defined between the pipeline structure (401) and the heat releasing device (201), the fluid is allowed to be filled in or sucked out, and the observation and maintenance can be carried out;
The volume of the fluid stored in the outward-expanding arc-shaped fluid chamber (108) installed close to the fluid inlet/outlet port of the heat gaining device (101) or the heat releasing device (201) is relatively larger, therefore the total heat capacity is larger, when the thermal energy introduced from the temperature differentiation body which is in contact with exterior of the heat gaining device (101) or the heat releasing device (201) is transmitted towards two ends through the fluid, the fluid at the end where the heat gaining device (101) or the heat releasing device (201) being provided with the outward-expanding arc-shaped fluid chamber (108) generates a smaller temperature difference, the other end where the outward-expanding arc-shaped fluid chamber (108) not being installed generates a greater temperature difference, thereby forming temperature differentiation at two ends of the inlet/outlet port of the heat gaining device (101) or the heat releasing device (201);
The mentioned close-loop temperature equalization device includes at least a heat gaining device (101), at least a heat releasing device (201), at least a pipeline structure (301) and at least a pipeline structure (401) in series connection or in series and parallel connection to configure a close-loop flowpath; wherein the heat gaining device (101), the heat releasing device (201), the pipeline structure (301) and the pipeline structure (401) can be integrally formed or assembled by plural components, the dimension and shape at each connecting location for the assembly is in a gradually-altered shape for forming a smooth state, said smooth state can reduce the damping while the fluid is flowing, thereby facilitating the flow circulation of the fluid;
According to the present invention, the close-loop temperature equalization device can be further provided with the auxiliary fluid pump (107) series installed in the close-type circulation flowpath configured by the heat gaining device (101), the heat releasing device (201), the pipeline structure (301) and the pipeline structure (401) for actively controlling the auxiliary fluid pump (107) to pump in the normal direction or pump in the reverse direction or stop operation, as well as installed with an outward-expanding arc-shaped fluid chamber (108) at the upper end of the top corner of the close-type circulation flowpath for lowering the damping of the close-type circulative flow of the heat exchange fluid (104), so as to facilitate the heat exchange; which is illustrated as followings:
FIG. 4 is a lateral structure view showing the embodiment illustrated in FIG. 1 being installed with the auxiliary fluid pump (107) and being installed with the outward-expanding arc-shaped fluid chamber (108) and the operation port (111) and the sealing plug (110) at the top end of the corner part of the close-type flowpath;
As shown in FIG. 4, the heat gaining device (101) is installed in a natural heat storage body (100) which is constituted by a solid or liquid heat storage body having greater and stable heat storage capacity such as a stratum, ground, lake, pool, river, desert, berg and ocean;
A fluid inlet/output port (1011) of the heat gaining device (101) is connected to the fluid inlet/outlet port (2012) of the heat releasing device (201) via the pipeline structure (301), another fluid inlet/outlet port (1012) of the heat gaining device (101) is connected to a fluid inlet/outlet port (2011) of the heat releasing device (201) via the pipeline structure (401) thereby forming a close-loop circulation flowpath, so the heat exchange fluid (104) passing the heat gaining device (101) is enabled to form a close-type circulation flowpath through the pipeline structures (301), (401) and the heat releasing device (201), and the heat releasing device (201) releases the thermal energy to the temperature differentiation body (103) at its periphery being subjected to temperature equalization; according to the close-loop temperature equalization device provided by the present invention, through the heat exchange fluid (104) performing close-loop flow circulation in the close-loop temperature equalization device, the thermal energy of the natural heat storage body (100) and the thermal energy of the temperature differentiation body (103) subjected to temperature equalization are transmitted for temperature equalization; the heat exchange fluid (104) is constituted by a gaseous or liquid fluid having heat storage and thermal conduction properties; the temperature differentiation body (103) is a space or structure configured by gas or solid or liquid for receiving the thermal energy released by the heat exchange fluid passing the heat releasing device (201) during the system operation;
Features of main components are as followings:
-- Outward-expanding arc-shaped fluid chamber (108): which is constituted by an outward-expanding arc-shaped flowpath structure formed at one or more than one of the turning locations of the close-type circulation flowpath configured by the heat gaining device (101), the heat releasing device (201), the pipeline structure (301) and the pipeline structure (401), for temporally storing a part of the heat exchange fluid (104) and moderating the flow speed of the heat exchange fluid (104) having thermal energy, so as to reduce the flow damping of the close-type circulation flowpath to the heat exchange fluid (104), and by installing the sealing plug (110) and the operation port (111) at the upper end of the outward-expanding arc-shaped fluid chamber (108) installed at the turning location defined between the pipeline structure (401) and the heat releasing device (201), the fluid is allowed to be filled in or sucked out, and the observation and maintenance can be carried out;
The volume of the fluid stored in the outward-expanding arc-shaped fluid chamber (108) installed close to the fluid inlet/outlet port of the heat gaining device (101) or the heat releasing device (201) is relatively larger, therefore the total heat capacity is larger, when the thermal energy introduced from the temperature differentiation body which is in contact with exterior of the heat gaining device (101) or the heat releasing device (201) is transmitted towards two ends through the fluid, the fluid at the end where the heat gaining device (101) or the heat releasing device (201) being provided with the outward-expanding arc-shaped fluid chamber (108) generates a smaller temperature difference, the other end where the outward-expanding arc-shaped fluid chamber (108) not being installed generates a greater temperature difference, thereby forming temperature differentiation at two ends of the inlet/outlet port of the heat gaining device (101) or the heat releasing device (201); -- Auxiliary fluid pump (107): which is constituted by a fluid pump driven by a motor driven by the electric power externally supplied through a power wire (118) or by a fluid pump driven by natural forces, provided for being series connected to the mentioned close-type circulation flowpath for pumping the heat exchange fluid (104); the auxiliary fluid pump (107) includes a fixed single-direction pumping operation, or the pumping direction is selectable, and the operation of ON/OFF, speed changing or the pumping flow amount is being controllable;
The operation function thereof includes: the auxiliary fluid pump (107) is not operated, and the heat exchange fluid (104) circulates due to the cold descending/hot ascending effect; or actively controlling the auxiliary fluid pump (107) to pump in the normal direction, for performing auxiliary pumping in the same direction as the cold descending/hot ascending flow direction of the heat exchange fluid (104); or actively controlling the auxiliary fluid pump (107) to pump in the reverse direction, for performing reverse pumping in the direction opposite to the cold descending/hot ascending flow direction of the heat exchange fluid (104);
The mentioned close-loop temperature equalization device includes at least a heat gaining device (101), at least a heat releasing device (201), at least a pipeline structure (301) and at least a pipeline structure (401) in series connection or in series and parallel connection to configure a close-loop flowpath; wherein the heat gaining device (101), the heat releasing device (201), the pipeline structure (301) and the pipeline structure (401) can be integrally formed or assembled by plural components, the dimension and shape at each connecting location for the assembly is in a gradually-altered shape for forming a smooth state, said smooth state can reduce the damping while the fluid is flowing, thereby facilitating the flow circulation of the fluid;
According to the present invention, the close-loop temperature equalization device can be further installed with an outward-expanding arc-shaped fluid chamber (108) at the upper end of the top corner of the close-type circulation flowpath configured by the heat gaining device (101), the heat releasing device (201), the pipeline structure (301) and the pipeline structure (401) for lowering the damping of the circulative flow of the heat exchange fluid (104), and the outward-expanding arc-shaped fluid chamber (108) disposed at the topmost is installed with a top cover (112) capable of being opened or tightly engaged, a hinge (113), a sealing ring (114), and having the sealing plug (110) and the operation port (111) installed at the upper end of the top cover, which is illustrated as followings:
FIG. 5 is a lateral structural view showing the embodiment illustrated in FIG. 1 being installed with the outward-expanding arc-shaped fluid chamber (108) at the upper end of the top corner of the close-type flowpath, and the outward-expanding arc-shaped fluid chamber (108) disposed at the topmost being installed with the top cover (112) capable of being opened or tightly engaged, the hinge (113), the sealing ring (114), and having the sealing plug (110) and the operation port (111) installed at the upper end of the top cover, according to the present invention;
As shown in FIG. 5, the heat gaining device (101) is installed in a natural heat storage body (100) which is constituted by a solid or liquid heat storage body having greater and stable heat storage capacity such as a stratum, ground, lake, pool, river, desert, berg and ocean;
A fluid inlet/output port (1011) of the heat gaining device (101) is connected to the fluid inlet/outlet port (2012) of the heat releasing device (201) via the pipeline structure (301), another fluid inlet/outlet port (1012) of the heat gaining device (101) is connected to a fluid inlet/outlet port (2011) of the heat releasing device (201) via the pipeline structure (401) thereby forming a close-loop circulation flowpath, so the heat exchange fluid (104) passing the heat gaining device (101) is enabled to form a close-type circulation flowpath through the pipeline structures (301), (401) and the heat releasing device (201), and the heat releasing device (201) releases the thermal energy to the temperature differentiation body (103) at its periphery being subjected to temperature equalization; according to the close-loop temperature equalization device provided by the present invention, through the heat exchange fluid (104) performing close-loop flow circulation in the close-loop temperature equalization device, the thermal energy of the natural heat storage body (100) and the thermal energy of the temperature differentiation body (103) subjected to temperature equalization are transmitted for temperature equalization; the heat exchange fluid (104) is constituted by a gaseous or liquid fluid having heat storage and thermal conduction properties; the temperature differentiation body (103) is a space or structure configured by gas or solid or liquid for receiving the thermal energy released by the heat exchange fluid passing the heat releasing device (201) during the system operation;
Features of main components are as fallowings:
-- Outward-expanding arc-shaped fluid chamber (108): which is constituted by an outward-expanding arc-shaped flowpath structure formed at one or more than one of the turning locations of the dose-type circulation flowpath configured by the heat gaining device (101), the heat releasing device (201), the pipeline structure (301) and the pipeline structure (401), for temporally storing a part of the heat exchange fluid (104) and moderating the How speed of the heat exchange fluid (104) having thermal energy, so as to reduce the flow damping of the close-type circulation flowpath to the heat exchange fluid (104);
And by installing the mentioned outward-expanding arc-shaped fluid chamber (108) at the upper end of the top corner of the close-type circulation flowpath configured by the heat gaining device (101), the heat releasing device (201), the pipeline structure (301) and the pipeline structure (401), the damping generated when the heat exchange fluid (104) performs circulative flow can be reduced thereby facilitating the heat exchange, and the outward-expanding arc-shaped fluid chamber (108) disposed at the topmost being installed with the top cover (112) capable of being opened or tightly engaged, the hinge (113) and the sealing ring (114) for the benefit of the pipeline maintenance, and the upper end of the top cover is installed with the sealing plug (110) and the operation port (111) allowing the fluid to be filled in or sucked out and allowing observation and maintenance to be carried, wherein a protection fence or protection net can be optionally installed between the top cover (112) and the pipeline;
The volume of the fluid stored in the outward-expanding arc-shaped fluid chamber (108) installed close to the fluid inlet/outlet port of the heat gaining device (101) or the heat releasing device (201) is relatively larger, therefore the total heat capacity is larger, when the thermal energy introduced from the temperature differentiation body which is in contact with exterior of the heat gaining device (101) or the heat releasing device (201) is transmitted towards two ends through the fluid, the fluid at the end where the heat gaining device (101) or the heat releasing device (201) being provided with the outward-expanding arc-shaped fluid chamber (108) generates a smaller temperature difference, the other end where the outward-expanding arc-shaped fluid chamber (108) not being installed generates a greater temperature difference, thereby form ing temperature differentiation at two ends of the inlet/outlet port of the heat gaining device (101) or the heat releasing device (201);
The mentioned close-loop temperature equalization device includes at least a heat gaining device (101), at least a heat releasing device (201), at least a pipeline structure (301) and at least a pipeline structure (401) in series connection or in series and parallel connection to configure a close-loop flowpath; wherein the heat gaining device (101), the heat releasing device (201), the pipeline structure (301) and the pipeline structure (401) can be integrally formed or assembled by plural components, the dimension and shape at each connecting location for the assembly is in a gradually-altered shape for forming a smooth state, said smooth state can reduce the damping while the fluid is flowing, thereby facilitating the flow circulation of the fluid;
According to the present invention, the close-loop temperature equalization device can be further series installed with the auxiliary fluid pump (107) in the close-type circulation flowpath configured by the heat gaining device (101), the heat releasing device (201), the pipeline structure (301) and the pipeline structure (401) for actively controlling the auxiliary fluid pump (107) to pump in the normal direction or pump in the reverse direction or stop operation, and the outward-expanding arc-shaped fluid chamber (108) is also installed at the upper end of the top corner of the close-type flowpath for lowering the damping of the close-type circulative flow of the heat exchange fluid (104) thereby facilitating the heat exchange, and the outward-expanding arc-shaped fluid chamber (108) disposed at the topmost is further installed with the top cover (112) capable of being opened or tightly engaged, the hinge (113), the sealing ring (114), and having the scaling plug (110) and the operation port (111) instal led at the upper end of the top cover, which is illustrated as followings:
FIC). 6 is a lateral structural view showing the embodiment illustrated in FIG. 1 being installed with the auxiliary fluid pump and installed with the outward-expanding arc-shaped fluid chamber (108) at the upper end of the top corner of the close-type flowpath, and the outward-expanding arc-shaped fluid chamber (108) disposed at the topmost being further installed with the top cover (112) capable of being opened or tightly engaged, the hinge (113), the sealing ring (114), and having the sealing plug (110) and the operation port (111) installed at the upper end of the top cover, according to the present invention;
As shown in FIG. 6, the heat gaining device (101) is installed in a natural heat storage body (100) which is constituted by a solid or liquid heat storage body having greater and stable heat storage capacity such as a stratum, ground, lake, pool, river, desert, berg and ocean;
A fluid inlet/output port (1011) of the heat gaining device (101) is connected to the fluid inlet/outlet port (2012) of the heat releasing device (201) via the pipeline structure (301), another fluid inlet/outlet port (1012) of the heat gaining device (101) is connected to a fluid inlet/outlet port (2011) of the heat releasing device (201) via the pipeline structure (401) thereby forming a close-loop circulation flowpath, so the heat exchange fluid (104) passing the heat gaining device (101) is enabled to form a close-type circulation flowpath through the pipeline structures (301), (401) and the heat releasing device (201), and the heat releasing device (201) releases the thermal energy to the temperature differentiation body (103) at its periphery being subjected to temperature equalization; according to the close-loop temperature equalization device provided by the present invention, through the heat exchange fluid (104) performing close-loop flow circulation in the close-loop temperature equalization device, the thermal energy of the natural heat storage body (100) and the thermal energy of the temperature differentiation body (103) subjected to temperature equalization are transmitted for temperature equalization; the heat exchange fluid (104) is constituted by a gaseous or liquid fluid having heat storage and thermal conduction properties; the temperature differentiation body (103) is a space or structure configured by gas or solid or liquid for receiving the thermal energy released by the heat exchange fluid passing the heat releasing device (201) during the system operation;
Features of main components are as followings:
--Outward-expanding arc-shaped fluid chamber (108): which is constituted by an outward-expanding arc-shaped flowpath structure formed at one or more than one of the turning locations of the close-type circulation flowpath configured by the heat gaining device (101), the heat releasing device (201), the pipeline structure (301) and the pipeline structure (401), for temporally storing a part of the heat exchange fluid (104) and moderating the flow speed of the heat exchange fluid (104) having thermal energy, so as to reduce the flow damping of the close-type circulation flowpath to the heat exchange fluid (104), and the outward-expanding arc-shaped fluid chamber (108) disposed at the topmost being installed with the top cover (112) capable of being opened or tightly engaged, the hinge (113) and the sealing ring (114) for the benefit of the pipeline maintenance, and the upper end of the top cover is installed with the scaling plug (110) and the operation port (111) allowing the fluid to be filled in or sucked out and allowing observation and maintenance to be carried, and a protection fence or protection net can be optionally installed between the top cover (112) and the pipeline;
The volume of the fluid stored in the outward-expanding arc-shaped fluid chamber (108) installed close to the fluid inlet/outlet port of the heat gaining device (101) or the heat releasing device (201) is relatively larger, therefore the total heat capacity is larger, when the thermal energy introduced from the temperature differentiation body which is in contact with exterior of the heat gaining device (101) or the heat releasing device (201) is transmitted towards two ends through the fluid, the fluid at the end where the heat gaining device (101) or the heat releasing device (201) being provided with the outward-expanding arc-shaped fluid chamber (108) generates a smaller temperature difference, the other end where the outward-expanding arc-shaped fluid chamber (108) not being installed generates a greater temperature difference, thereby forming temperature differentiation at two ends of the inlet/outlet port of the heat gaining device (101) or the heat releasing device (201);
--Auxiliary fluid pump (107): which is constituted by a fluid pump driven by a motor driven by the electric power externally supplied through a power wire (118) or by a fluid pump driven by natural forces, provided for being series connected to the mentioned close-type circulation flowpath for pumping the heat exchange fluid (104); the auxiliary fluid pump (107) includes a fixed single-direction pumping operation, or the pumping direction is selectable, and the operation of ON/OFF, speed changing or the pumping flow amount is being controllable;
The operation function thereof includes: the auxiliary fluid pump (107) is not operated, and the heat exchange fluid (104) circulates due to the cold descending/hot ascending effect; or actively controlling the auxiliary fluid pump (107) to pump in the normal direction, for performing auxiliary pumping in the same direction as the cold descending/hot ascending flow direction of the heat exchange fluid (104); or actively controlling the auxiliary fluid pump (107) to pump in the reverse direction, for performing reverse pumping in the direction opposite to the cold descending/hot ascending flow direction of the heat exchange fluid (104);
The mentioned close-loop temperature equalization device includes at least a heat gaining device (101), at least a heat releasing device (201), at least a pipeline structure (301) and at least a pipeline structure (401) in series connection or in series and parallel connection to configure a close-loop flowpath; wherein the heat gaining device (101), the heat releasing device (201), the pipeline structure (301) and the pipeline structure (401) can be integrally formed or assembled by plural components, the dimension and shape at each connecting location for the assembly is in a gradually-altered shape for forming a smooth state, said smooth state can reduce the damping while the fluid is flowing, thereby facilitating the flow circulation of the fluid;
According to the embodiments of the close-loop temperature equalization device as shown from FIG. 1 to FIG. 6, one or more than one auxiliary heating/cooling device (115) can be installed for enhancing the thermal energy transmitted from the heat releasing device (201) to the temperature differentiation body (103), wherein:
-Auxiliary heating/cooling device (115): which is driven by the electric power provided from a power wire (116), including being constituted by an electrothermal device capable of converting electric energy into thermal energy, or constituted by a temperature regulation device capable of converting electric energy into thermal energy or converting electric energy into cool energy, or constituted by the semiconductor chips capable of converting electric energy into thermal energy or cooling energy, and installed in the close-type circulation flowpath of the close-loop temperature equalization device, and disposed at a location for being capable of assisting the heat exchange fluid (104) to perform hot ascending/coid descending and would not influence the How of heat exchange fluid (104); the installation means includes one or more than one of the following means: 1) fixedly installed inside the close-type circulation flowpath; 2) being accommodated to the close-type circulation flowpath randomly from the operation port (111) or via opening the top cover (112), 3) installed at the bottom of the sealing plug (110) for being coupled to the circulation flowpath, and 4) surroundingly or partially installed at the exterior of the close-type circulation flowpath made of a heat conductive material for indirectly heating or cooling the heat exchange fluid (104) inside the circulation flowpath;
FIG. 7 is a lateral structural view showing the cross section of F[G. 1 wherein the interior or exterior of the flowpath segment configured by the heat gaining device (101) and the pipeline structure (401) being installed with the auxiliary heating/cooling device (115), according to the present invention.

FIG, 8 is a lateral structural view showing the cross section of FIG. 2 wherein the interior of the flowpath segment configured by the heat gaining device (101) and the pipeline structure (401) being installed with the auxiliary fluid pump (107), and the interior or the exterior being installed with the auxiliary heating/cooling device (115), according to the present invention.

FIG. 9 is a lateral structural view showing the cross section of FiG.3 wherein the interior or exterior of the flowpath segment configured by the heat gaining device (101) and the pipeline structure (401) being installed with the auxiliary heating/cooling device (115), according to the present invention.

FIG. 10 is a lateral structural view showing the cross section of FIG. 4 wherein the interior of the flowpath segment configured by the heat gaining device (101) and the pipeline structure (401) being installed with the auxiliary fluid pump (107), and the interior or the exterior being installed with the auxiliary heating/cooling device (115), according to the present invention.

FIG. 11 is a lateral structural view showing the cross section of FIG. 5 wherein the interior or exterior of the flowpath segment configured by the heat gaining device (101) and the pipeline structure (401) being installed with the auxiliary heating/cooling device (115), according to the present invention.

FIG. 12 is a lateral structural view showing the cross section of FIG. 6 wherein the interior of the flowpath segment configured by the heat gaining device (101) and the pipeline structure (401) being installed with the auxiliary fluid pump (107), and the interior or the exterior being installed with the auxiliary heating/cooling device (115), according to the present invention.

According to the embodiments disclosed in FIG. 2, FIG. 4, FIG. 6, and FIG. 7 to FIG. 12, the present invention can be further installed with one or both of the auxiliary fluid pump (107) and the auxiliary heating/cooling device (115), and one or both of the heat exchange fluid temperature detecting device (TS201) and the environment temperature detecting device (TS202), wherein the auxiliary fluid pump (107), the auxiliary heating/cooling device (115), the heat exchange fluid temperature detecting device (TS201) and the environment temperature detecting device (TS202) can be controlled through operations of manually reading or setting in a power supply state, or can be controlled to operate in a power supply state by the installation of the electric power control unit (ECU200);
FIG. 13 is a schematic view showing the present invention being installed with the electric power control unit (ECU200), the heat exchange fluid temperature detecting device (TS201) and the environment temperature detecting device (TS202) for controlling the auxiliary fluid pump (107).

As shown in FIG. 13, one or more than one of the heat exchange fluid temperature detecting device (TS201) is installed in the close-type circulation flowpath, and by utilizing a signal transmission wire (120) to transmit the detected temperature value of the heat exchange fluid to the electric power control unit (ECU200), and an environment temperature detecting device (TS202) is installed, and by utilizing the signal transmission wire (120) to feedback the detected temperature value to the electric power control unit (ECU200), the timing for supplying power for operation and the amount of pumping flow and pumping direction of the auxiliary fluid pump (107) can be controlled by the electric power control unit (ECU200) with respect to the internal setting and the feedback signals of the heat exchange fluid temperature detecting device (TS201) and the environment temperature detecting device (TS202); wherein:
--Electric power control unit (ECU200): which is constituted by electromechanical components or electric circuit components or micro processors or related software, and the interior is equipped with operation parameter setting and with respect to the signals sent by the heat exchange fluid temperature detecting device (TS201) and the environment temperature detecting device (TS202) for controlling the timing for supplying the electric power for operation and the amount of pumping flow and pumping direction of the auxiliary fluid pump (107);
-- Heat exchange fluid temperature detecting device (TS201) and environment temperature detecting device (TS202): which is constituted by one or more than one of temperature detecting devices capable of converting the temperature variation into an analog or digital electric power signal, and installed at the selected temperature detecting points or environment temperature detecting points in the close-type circulation flowpath for transmitting the signals to the electric power control unit (ECU200) through the signal transmission wire (120);
The mentioned environment temperature detecting device (TS202) can be optionally installed according to actual needs.

FIG. 14 is a schematic view showing the present invention being installed with the electric power control unit (ECU200), the heat exchange fluid temperature detecting device (TS201) and the environment temperature detecting device (TS202) for controlling the auxiliary heating/cooling device (115);
As shown in FIG. 14, one or more than one of the heat exchange fluid temperature detecting device (TS201) is installed in the close-type circulation flowpath, and by utilizing a signal transmission wire (120) to transmit the detected temperature value of the heat exchange fluid to the electric power control unit (ECU200), and the environment temperature detecting device (TS202) is installed, and by utilizing the signal transmission wire (120) to feedback the detected temperature value to the electric power control unit (ECU200), the timing for supplying power for heating and heating values of the auxiliary heating/cooling device (115) can be controlled by the electric power control unit (ECU200) with respect to the internal setting and the feedback signals of the heat exchange fluid temperature detecting device (TS201) and the environment temperature detecting device (TS202); wherein:
--Electric power control unit (ECU200): which is constituted by electromechanical components or electric circuit components or micro processors or related software, and the interior is equipped with operation parameter setting and with respect to the signals sent by the heat exchange fluid temperature detecting device (TS201) and the environment temperature detecting device (TS202) for controlling the timing for supplying the electric power for heating and the heating values of the auxiliary heating/cooling device (115);
-- Heat exchange fluid temperature detecting device (TS201) and environment temperature detecting device (TS202): which is constituted by one or more than one of temperature detecting devices capable of converting the temperature variation into an analog or digital electric power signal, and installed at the selected temperature detecting points or environment temperature detecting points in the close-type circulation flowpath for transmitting the signals to the electric power control unit (ECU200) through the signal transmission wire (120);
The mentioned environment temperature detecting device (TS202) can be optionally installed according to actual needs.

FIG. 15 is a schematic view showing the present invention being installed with the electric power control unit (ECU200), the heat exchange fluid temperature detecting device (TS201) and the environment temperature detecting device (TS202) for controlling the auxiliary fluid pump (107) and the auxiliary heating/cooling device (115);
As shown in FIG. 15, one or more than one of the heat exchange fluid temperature detecting device (TS201) is installed in the close-type circulation flowpath, and by utilizing a signal transmission wire (120) to transmit the detected temperature value of the heat exchange fluid to the electric power control unit (ECU200), and the environment temperature detecting device (TS202) is installed, and by utilizing the signal transmission wire (120) to feedback the detected temperature value to the electric power control unit (ECU200), the timing for supplying power for operation and the amount of pumping flow and pumping direction of the auxiliary fluid pump (107) and the timing for supplying power for heating and the heating values of the auxiliary heating/cooling device (115) can be controlled by the electric power control unit (ECU200) with respect to the internal setting and the feedback signals of the heat exchange fluid temperature detecting device (TS201) and the environment temperature detecting device (TS202); wherein:
--Electric power control unit (ECU200): which is constituted by electromechanical components or electric circuit components or micro processors or related software, and the interior is equipped with operation parameter setting and with respect to the signals sent by the heat exchange fluid temperature detecting device (TS201) and the environment temperature detecting device (TS202) for controlling the timing for supplying power for operation and the amount of pumping flow and pumping direction of the auxiliary fluid pump (107) and the timing for supplying power for heating and the heating values of the auxiliary heating/cooling device (115);
-- Heat exchange fluid temperature detecting device (TS201) and environment temperature detecting device (TS202): which is constituted by one or more than one of temperature detecting devices capable of converting the temperature variation into an analog or digital electric power signal, and installed at the selected temperature detecting points or environment temperature detecting points in the close-type circulation flowpath for transmitting the signals to the electric power control unit (ECU200) through the signal transmission wire (120);
The mentioned environment temperature detecting device (TS202) can be optionally installed according to actual needs.

In the close-loop temperature equalization device, the close-type circulation flowpath is configured by the heat gaining device (101), the heat releasing device (201), the pipeline structure (301) and the pipeline structure (401), wherein the heat releasing device (201) and the heat gaining device (101) are exposed entirely to be served as the heat gaining surface or the heat releasing surface, or both or one of the partial direction of the heat releasing device (201) and the heat gaining device (101) is served as the heat insulating surface to cover the heat insulation body (109); and the heat releasing device (201) configured by single flowpath or multiple flowpaths having more than one flowpaths, the heat gaining device (101) having one or more than one flowpaths, the pipeline structure (301) having one or more than one flowpaths and the pipeline structure (401) having one or more than one flowpaths are series connected in the same cross-sectional area of the flowpath or in different cross-sectional areas of the flowpath to constitute the close-type circulation flowpath; or multiple sets of the close-type circulation flowpath respectively configured by the heat gaining device (101), the heat releasing device (201), the pipeline structure (301), and the pipeline structure (401) are further parallel disposed to jointly constitute the close-type circulation flowpath; wherein each selectable flowpath structure is illustrated.

The structures of single flowpath structure having one flowpath can be selected as followings:
(I) The rectangular pipelines or pipeline structures having similar shapes: which are structured by rectangular pipes or pipeline structures having shapes similar to rectangular, including being configured by a heat conductive material, the exterior thereof is covered by a heat insulation member (109), and the interior thereof is configured by one or more than one of the following structures including: 1) formed as a hollow flowpath, 2) formed with a staggered semi-partitioned flowpath structure, 3) formed with a semi-partitioned flowpath structure at single side, and 4) formed with a partitioned flowpath structure (1007);
   FIG. 16 is a cross sectional view of a rectangular pipeline (1005) made of a heat conductive material, wherein the exterior being covered by the heat insulation member and the interior being hollow.
   FIG. 17 is a cross sectional view of a rectangular pipeline (1005) made of a heat conductive material, wherein the exterior being covered by the heat insulation member and the interior being formed with a partitioned flowpath structure (1007).
   The rectangular pipeline structure (1005) having the heat insulation body (109) covered at the exterior and having the partitioned flowpath structure (1007) at interior includes being configured integrally, or configured by two or more than two rectangular pipelines jointly constituted.
   The rectangular pipeline structures shown in FIG. 16 and FIG. 17 include being made of a non-heat conductive material, and the heat insulation member can be selected to be provided or not provided according to actual needs.
(II) The round pipelines or pipeline structures having similar shapes are made of a heat conductive material, the exterior thereof is covered by the heat insulation member (109), and the interior thereof is configured by one or more than one of the following structures including: 1) formed as a single pipeline structure having the heat insulation member (109) covered at the exterior, 2) the exterior of each round pipeline structure being covered by the heat insulation member (109) then arranged in parallel to form a multiple flowpath structure, 3) each round pipeline structure being formed with multiple flowpaths arranged in parallel and being connected by a connection structure then jointly covered by the heat insulation structure, 4) each round pipeline structure being spaced with intervals then jointly covered by the heat insulation member, and 5) the pipeline structures of said items 1)∼4) are further covered with a grid or lattice structural body at the exterior to prevent from being plugged;
   FIG. 18 is a cross sectional view of a round pipeline structure (1006) made of a heat conductive material, wherein the interior being hollow and the exterior being covered by the heat insulation member.
   FIG. 19 is a cross sectional view of a round pipeline structure (1006) made of a heat conductive material and having one or more than one flowpaths, wherein the exterior of each flowpath of round pipeline structure (1006) being covered by the heat insulation member then arranged in parallel to form a multiple flowpath structure.
   FIG. 20 is a cross sectional view of a round pipeline structure (1006) having one or more than one flowpaths of round pipeline structures and made of a heat conductive material, wherein each flowpath of round pipeline structure (1006) being arranged in parallel and formed in multiple flowpaths and connected by a connection structure then jointly being covered by a heat insulation member so as to form a multiple flowpath structure.
   FIG. 21 is a cross sectional view of a round pipeline structure (1006) having one or more than one paths of round pipeline structures and made of a heat conductive material, wherein each flowpath of round pipeline structure (1006) being spaced with intervals then jointly covered by a heat insulation member so as to form a multiple flowpath structure.
   The round pipeline structure (1006) shown from FIG. 18 to FIG. 21 includes being made of a non-heat conductive material, and the heat insulation member can be selected to be provided or not provided according to actual needs.
(III) The rectangular pipelines or pipeline structures having similar shapes are configured by a heat conductive material, and the external thermal energy transmitting surface is a heat releasing surface or a heat gaining surface of a planar thermal energy transmitting surface (1000) or wave-shaped thermal energy transmitting surface (1001), and the means for covering the heat insulation member (109) includes one of the followings: 1) not being covered by the heat insulation member (109), 2) the bottom side of the surface opposite to the thermal energy transmitting surface being covered by the heat insulation member (109), 3) the bottom side of the surface opposite to the thermal energy transmitting surface being covered by the heat insulation member (109), and the lateral sides also fully covered by the heat insulation member (109), 4) the bottom side of the surface opposite to the thermal energy transmitting surface being covered by the heat insulation member (109), and the lateral sides being partially covered by the heat insulation member (109); the interior thereof is configured by one or more than one of the following structures including: 1) formed in a hollow structure, 2) formed with the staggered thermal conductive fin sheet (1120) structure, and 3) formed with the thermal conductive fin sheet (1120) structure at single side, and 4) formed with a partitioned flowpath structure (1007);
   FIG. 22 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a hollow flowpath structure.
   FIG. 23 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a staggered thermal conductive fin sheet (1120) structure.
   FIG. 24 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with the thermal conductive fin sheet (1120) structure at single side.
   FIG. 25 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a partitioned flowpath structure (1007).
   The rectangular pipeline structure (1005) having the heat insulation body covered at the exterior and having the partitioned flowpath structure (1007) at interior thereof includes being configured integrally, or configured by two or more than two rectangular pipelines jointly constituted.
   In the embodiments shown from FIG. 22 to FIG. 25, when being covered by the heat insulation member (109), the locations where the heat insulation member (109) covers includes the three surfaces, except for the surface served as the thermal energy transmitting surface of the rectangular pipeline, and the heat insulation member (109) can further be used to cover the back side of the surface opposite to the thermal energy transmitting surface, or to cover both of the back side of the surface opposite to the thermal energy transmitting surface and the two lateral sides, so the two lateral sides of the rectangular pipeline can be served as the thermal energy transmitting surfaces;FIG. 26 is a cross sectional view showing the heat insulation member (109) covering the back side of the surface opposite to the planar thermal energy transmitting surface (1000) and the two lateral sides of the rectangular pipeline structure shown from FIG. 22 to FIG. 25.
   FIG. 27 is a cross sectional view showing the heat insulation member (109) covering the back side of the surface opposite to the planar thermal energy conductive surface (1000) of the rectangular pipeline structure shown from FIG. 22 to FIG. 25.
   As shown in FIG. 27, in the close-loop temperature equalization device, the rectangular pipeline is further covered by the heat insulation member (109) at the back side of the surface opposite to the thermal energy transmitting surface of the rectangular pipeline (1005), so as to enable the two lateral sides of the rectangular pipeline (1005) to be served as the thermal energy transmitting surfaces.
   FIG. 28 is a cross sectional view showing the heat insulation member (109) covering the back side of the surface opposite to the planar thermal energy conductive surface (1000) as well as a part of the two lateral sides of the rectangular pipeline structure shown from FIG. 22 to FIG. 25.
   As shown in FIG. 28, in the close-loop temperature equalization device, the rectangular pipeline is further covered by the heat insulation member (109) at the back side of the surface opposite to the thermal energy transmitting surface of the rectangular pipeline (1005) and at a part of the two lateral sides of the rectangular pipeline (1005), so a part of the two lateral sides of the rectangular pipeline (1005) are enabled to be served as the thermal energy transmitting surfaces. In the embodiments shown from FIG. 22 to FIG. 28, the heat gaining surface or the heat releasing surface providing the thermal energy transmitting function is not only in the structure of the planar thermal energy transmitting surface (1000), a wave-shaped thermal energy transmitting surface (1001) structure along the transversal cross section of the fluid flowing direction can be further provided for increasing the thermal energy transmitting effect between the fluid in the pipe and the exterior;
   FIG. 29 is a cross sectional view showing the planar thermal energy transmitting surface (1000) being further formed in a wave-like thermal energy transmitting surface (1001) along the transversal cross section of the fluid flowing direction.
   As shown in FIG. 29, according to the close-loop temperature equalization device, the rectangular pipeline (1005) is configured by the wave-like thermal energy transmitting surface (1001) structure.
(IV) The round pipelines or pipeline structures having similar shapes are configured by the heat conductive material and configured by one or more than one of the round pipeline structures (1006) as followings, including: 1) the interior of round pipeline (1006) being formed as a hollow structure, 2) the interior of the round pipeline (1006) being formed with a structure wherein the thermal conductive fin sheets (1120) radially spaced with three equal angles and extending towards the center but not in contact with each other, 3) the interior of round pipeline (1006) being formed with a structure wherein fin sheets radially spaced with three equal angles and extending towards the center for being connected with each other, 4) the interior of round pipeline (1006) being formed with a structure wherein fin sheets radially spaced with two equal angles and extending towards the center for being connected with each other, 5) the interior of round pipeline (1006) being formed with a structure wherein fin sheets radially spaced with four equal angles and extending towards the center for being connected with each other, and 6) the pipeline structures of said items 1)∼5) are further covered with a grid or lattice structural body at the exterior to prevent from being plugged;
   FIG. 30 is a cross sectional view showing the round pipeline structure (1006) made of a heat conductive material, wherein the pipeline is in round or similar shapes and the interior being formed with a hollow structure.
   FIG. 31 is a cross sectional view showing the round pipeline structure (1006) made of a heat conductive material, wherein the pipeline is in round or similar shapes and the interior being formed with a structure wherein the thermal conductive fin sheets (1120) radially spaced with three equal angles and extending towards the center but not in contact with each other.
   FIG. 32 is a cross sectional view showing the round pipeline structure (1006) made of a heat conductive material, wherein the pipeline is in round or similar shapes and the interior being formed with a the fin-type partitioned flowpath structure (1007) wherein fin sheets radially spaced with three equal angles and extending towards the center for being connected with each other.
   FIG. 33 is a cross sectional view showing the round pipeline structure (1006) made of a heat conductive material, wherein the pipeline is in round or similar shapes and the interior being formed with a the fin-type partitioned flowpath structure (1007) wherein fin sheets radially spaced with two equal angles and extending towards the center for being connected with each other.
   FIG. 34 is a cross sectional view showing the round pipeline structure (1006) made of a heat conductive material, wherein the pipeline is in round or similar shapes and the interior being formed with a fin-type partitioned flowpath structure (1007) wherein fin sheets radially spaced with four equal angles and extending towards the center for being connected with each other.
(V) The round pipelines or pipeline structures having similar shapes are configured by the heat conductive material, and the pipeline arrangement is configured by one or more than one of the pipeline arrangement means including: 1) multiple pipelines being up/down staggeredly separated, 2) multiple pipelines being up/down staggeredly separated and a connection structure being provided between the pipelines, 3) multiple pipelines being linearly and adjacently arranged, 4) multiple pipelines being linearly separated, 5) multiple pipelines being linearly separated and a connection structure being provided between the pipelines, and 6) the pipeline structures of said items 1)∼5) are further covered with a grid or lattice structural body at the exterior to prevent from being plugged;
   FIG. 35 is a cross sectional view showing the multiple pipeline structure made of a heat conductive material, wherein the multiple pipelines being up/down staggeredly separated.
   FIG. 36 is a cross sectional view showing the multiple pipeline structure made of a heat conductive material, wherein the multiple pipelines being up/down staggeredly separated and having a connection device between the pipelines.
   FIG. 37 is a cross sectional view showing the multiple pipeline structure made of a heat conductive material, wherein the multiple pipelines being linearly and adjacently arranged.
   FIG. 38 is a cross sectional view showing the round pipeline structure (1006) made of a heat conductive material, wherein the multiple pipelines being linearly separated.
   FIG. 39 is a cross sectional view showing the round pipeline structure (1006) made of a heat conductive material, wherein the multiple pipelines being linearly separated and a connection structure being provided between the pipelines.
(VI) The round pipelines or pipeline structures having similar shapes are configured by the heat conductive material, and a part of the pipeline surface is served as a heat gaining surface or a heat releasing surface for transmitting thermal energy, and the other part of the pipeline surface is covered by the heat insulation member (109), and the pipeline arrangement is configured by one or more than one of the pipeline arrangement means including: 1) formed with a single pipeline structure, 2) multiple pipelines being up/down staggeredly separated, 3) multiple pipelines being up/down staggeredly separated and a connection structure being provided between the pipelines, 4) multiple pipelines being linearly and adjacently arranged, 5) multiple pipelines being linearly separated, 6) multiple pipelines being linearly separated and a connection structure being provided between the pipelines, and 7) the pipeline structures of said items 1)∼6) are further covered with a grid or lattice structural body at the exterior to prevent from being plugged;
   FIG. 40 is a cross sectional view showing the single pipeline structure being made of a heat conductive material, wherein a part of the pipeline surface being exposed externally and the other part being covered by the heat insulation member (109).
   FIG. 41 is a cross sectional view showing the multiple pipeline structure made of a heat conductive material, wherein the multiple pipelines being up/down staggeredly separated, a part of each pipeline surface being exposed externally and the other part being covered by the heat insulation member (109).
   FIG. 42 is a cross sectional view showing the multiple pipeline structure made of a heat conductive material, wherein the multiple pipelines being up/down staggeredly separated and a connection structure being provided between the pipelines, a part of each pipeline surface being exposed externally and the other part being covered by the heat insulation member (109).
   FIG. 43 is a cross sectional view showing the multiple pipeline structure made of a heat conductive material, wherein the multiple pipelines being linearly and adjacently arranged, a part of each pipeline surface being exposed externally and the other part being covered by the heat insulation member (109).
   FIG. 44 is a cross sectional view showing the round pipeline structure (1006) made of a heat conductive material, wherein the multiple pipelines being linearly separated, a part of each pipeline surface being exposed externally and the other part being covered by the heat insulation member (109).
   FIG. 45 is a cross sectional view showing the round pipeline structure (1006) made of a heat conductive material, wherein the multiple pipelines being linearly separated and a connection structure being provided between the pipelines, a part of each pipeline surface being exposed externally and the other part being covered by the heat insulation member (109).
(VII) The round pipelines or pipeline structures having similar shapes are configured by a heat conductive material, the thermal energy transmitting surface is applied as the heat releasing surface of the heat releasing device (201) or the heat gaining surface of the heat gaining device (101), and the exterior thereof is installed with the thermal conductive fin sheets (1120), and configured by one or more than one of the pipeline arrangement means including: 1) formed with a single pipeline structure, 2) multiple pipelines being up/down staggeredly separated, 3) multiple pipelines being up/down staggeredly separated and a connection structure being provided between the pipelines, 4) multiple pipelines being linearly and adjacently arranged, 5) multiple pipelines being linearly separated, 6) multiple pipelines being linearly separated and a connection structure being provided between the pipelines, and 7) the pipeline structures of said items 1)∼6) are further covered with a grid or lattice structural body at the exterior to prevent from being plugged;
   FIG. 46 is a cross sectional view showing the single pipeline structure being made of a heat conductive material and the exterior of the thermal energy transmitting surface being installed with a thermal conductive fin sheet (1120).
   FIG. 47 is a cross sectional view showing the multiple pipeline structure made of a heat conductive material, wherein the multiple pipelines being up/down staggeredly separated and the exterior of each thermal energy transmitting surface being installed with a thermal conductive fin sheet (1120).
   FIG. 48 is a cross sectional view showing the multiple pipeline structure made of a heat conductive material, wherein the multiple pipelines being up/down staggeredly separated and having a connection structure between each pipeline and the exterior of each thermal energy transmitting surface being installed with a thermal conductive fin sheet (1120).
   FIG. 49 is a cross sectional view showing the multiple pipeline structure made of a heat conductive material, wherein the multiple pipelines being linearly and adjacently arranged and the exterior of each thermal energy transmitting surface being installed with a thermal conductive fin sheet (1120).
   FIG. 50 is a cross sectional view showing the round pipeline structure (1006) made of a heat conductive material, wherein the multiple pipelines being linearly separated and the exterior of each thermal energy transmitting surface being installed with a thermal conductive fin sheet (1120).
   FIG. 51 is a cross sectional view showing the round pipeline structure (1006) made of a heat conductive material, wherein the multiple pipelines being linearly separated and a connection structure being provided between each pipeline and the exterior of each thermal energy transmitting surface being installed with a thermal conductive fin sheet (1120).
(VIII) The rectangular pipelines or pipeline structures having similar shapes are configured by the heat conductive material, and the thermal energy transmitting surface is applied as the heat releasing surface of the heat releasing device (201) or the heat gaining surface of the heat gaining device (101), the exterior are installed with the thermal conductive fin sheet (1120), and the interior is configured by one or more than one of the following pipeline arrangement means including: 1) formed as a hollow structure, 2) formed with a staggered thermal conductive fin sheet (1120) structure, 3) formed with a thermal conductive fin sheet (1120) structure at single side, 4) formed with a partitioned flowpath structure (1007), and 5) the pipeline structures of said items 1)∼4) are further covered with a grid or lattice structural body at the exterior to prevent from being plugged;
   FIG. 52 is a cross sectional view of a rectangular pipeline (1005) made of a heat conductive material, wherein the exterior of the thermal energy transmitting surface being installed with thermal conductive fin sheets (1120) and the interior thereof being in a hollow structure.
   FIG. 53 is a cross sectional view of a rectangular pipeline (1005) made of a heat conductive material, wherein the exterior of the thermal energy transmitting surface being installed with thermal conductive fin sheets (1120) and the interior thereof being formed with a staggered thermal conductive fin sheet (1120) structure.
   FIG. 54 is a cross sectional view of a rectangular pipeline (1005) made of a heat conductive material, wherein the exterior of the thermal energy transmitting surface being installed with thermal conductive fin sheets (1120) and the interior thereof being formed with a thermal conductive fin sheet (1120) structure at single side.
   FIG. 55 is a cross sectional view of a rectangular pipeline (1005) made of a heat conductive material, wherein the exterior of the thermal energy transmitting surface being installed with thermal conductive fin sheets (1120), and the interior thereof being formed with a partitioned flowpath structure (1007). The rectangular pipeline structure covering with the heat insulation body at the exterior and having the partitioned flowpath structure (1007) at the interior includes being configured integrally, or configured by two or more than two rectangular pipelines (1005) jointly constituted
(IX) The W-shaped pipelines or pipeline structures having similar shapes are formed with outward-bended wave-shaped thermal energy transmitting surfaces serving as heat releasing surfaces or heat gaining surfaces at the wider top and bottom surfaces thereof, and configured by a heat conductive material, and the interior is configured by one or more than one of the following pipeline arrangement means including: 1) formed as a hollow structure, 2) formed with a staggered thermal conductive fin sheet (1120) structure, 3) formed with a thermal conductive fin sheet (1120) structure at single side, 4) formed with a partitioned flowpath structure (1007), and 5) the pipeline structures of said items 1)∼4) are further covered with a grid or lattice structural body at the exterior to prevent from being plugged;
   FIG. 56 is a cross sectional view of a W-shaped pipeline (1004) made of a heat conductive material, wherein the wider top and bottom surfaces being formed with wave-shaped thermal energy transmitting surfaces (1001) serving as heat releasing surfaces or heat gaining surfaces and the interior thereof being formed with a hollow structure.

FIG. 57 is a cross sectional view of a W-shaped pipeline (1004) made of a heat conductive material, wherein the wider top and bottom surfaces being formed with wave-shaped thermal energy transmitting surfaces (1001) serving as heat releasing surfaces or heat gaining surfaces and the interior thereof being formed with a staggered thermal conductive fin sheet (1120) structure.

FIG. 58 is a cross sectional view of a W-shaped pipeline (1004) made of a heat conductive material, wherein the wider top and bottom surfaces being formed with wave-shaped thermal energy transmitting surfaces (1001) serving as heat releasing surfaces or heat gaining surfaces and the interior thereof being formed with a thermal conductive fin sheet (1120) structure at single side.

FIG. 59 is a cross sectional view of a W-shaped pipeline (1004) made of a heat conductive material, wherein the exterior thereof being formed with wave-shaped thermal energy transmitting surfaces (1001) for being served as the heat gaining surfaces, and the interior thereof being formed with a partitioned flowpath structure (1007).

The W-shaped pipeline structure covering with the heat insulation body at the exterior and having the partitioned flowpath structure (1007) at the interior includes being configured integrally, or configured by two or more than two W-shaped pipelines (1004) jointly constituted.

The embodiments for illustrating each pipeline structure as shown from FIG. 16 to FIG. 59 are served as examples for the applications of the close-loop temperature equalization device, and the scope of the present invention shall not be limited thereby.

In the close-loop temperature equalization device, the heat releasing device (201) further include to be configured by two or more than two flowpaths, the heat releasing device (201) and the heat gaining device (101) are exposed entirely to be served as the heat gaining surface or the heat releasing surface, or both or one of the partial direction of the heat releasing device (201) and the heat gaining device (101) is served as the heat insulating surface to cover the heat insulation body (109); and the heat releasing device (201) having two or more than two flowpaths, the heat gaining device (101) having one or more than one flowpaths, the pipeline structure (301) having one or more than one flowpaths and the pipeline structure (401) having one or more than one flowpaths are series connected in the same cross-sectional area of the flowpath or in different cross-sectional areas of the flowpath to constitute the close-type circulation flowpath; or multiple sets of the close-type circulation flowpath respectively configured by the heat gaining device (101), the heat releasing device (201), the pipeline structure (301), and the pipeline structure (401) are further parallel disposed to jointly constitute the close-type circulation flowpath; wherein each selectable flowpath structure is illustrated as followings:
(I) The rectangular pipelines or pipeline structures having similar shapes are structured by rectangular pipes or pipeline structures having shapes similar to rectangular, including being configured by a heat conductive material, the exterior thereof is covered by a heat insulation member (109), and the interior thereof is configured by one or more than one of the following structures including: 1) formed as a hollow flowpath, 2) formed with a staggered semi-partitioned flowpath structure, 3) formed with a semi-partitioned flowpath structure at single side, and 4) formed with a partitioned flowpath structure (1007);
   FIG. 60 is a cross sectional view of a rectangular pipeline (1005) made of a heat conductive material, wherein the exterior being covered by the heat insulation member and the interior being hollow.
   FIG. 61 is a cross sectional view of a rectangular pipeline (1005) made of a heat conductive material, wherein the exterior being covered by the heat insulation member and the interior being formed with a staggered semi-partitioned structure.
   FIG. 62 is a cross sectional view of a rectangular pipeline (1005) made of a heat conductive material, wherein the exterior being covered by the heat insulation member and the interior being formed with a semi-partitioned structure at single side.
   FIG. 63 is a cross sectional view of a rectangular pipeline (1005) made of a heat conductive material, wherein the exterior being covered by the heat insulation member and the interior being formed with a partitioned structure (1007).
   The rectangular pipeline structure having the heat insulation body covered at the exterior and having the partitioned flowpath structure (1007) at interior includes being configured integrally, or configured by two or more than two rectangular pipelines (1005) jointly constituted.
   The rectangular pipeline structure shown from FIG. 60 to FIG. 63 includes being made of a non-heat conductive material, and the heat insulation member can be selected to be provided or not provided according to actual needs.
(II) The round pipelines or pipeline structures having similar shapes are made of a heat conductive material, the exterior thereof is covered by the heat insulation member (109), and the interior thereof is configured by one or more than one of the following structures including: 1) formed as a single pipeline structure having the heat insulation member (109) covered at the exterior, 2) the exterior of each round pipeline structure being covered by the heat insulation member (109) then arranged in parallel to form a multiple flowpath structure, 3) each round pipeline structure being formed with multiple flowpaths arranged in parallel and being connected by a connection structure then jointly covered by the heat insulation structure, and 4) each round pipeline structure being spaced with intervals then jointly covered by the heat insulation member;
   FIG. 64 is a cross sectional view of a round pipeline structure (1006) made of a heat conductive material, wherein the interior being hollow and the exterior being covered by the heat insulation member.
   FIG. 65 is a cross sectional view of a round pipeline structure (1006) made of a heat conductive material and having one or more than one flowpaths, wherein the exterior of each flowpath of round pipeline structure being covered by the heat insulation member then arranged in parallel to form a multiple flowpath structure.
   FIG. 66 is a cross sectional view of a round pipeline structure (1006) having one or more than one flowpaths of round pipeline structures and made of a heat conductive material, wherein each flowpath of round pipeline structure being arranged in parallel and formed in multiple flowpaths and connected by a connection structure then jointly being covered by a heat insulation member so as to form a multiple flowpath structure.
   FIG. 67 is a cross sectional view of a round pipeline structure (1006) having one or more than one paths of round pipeline structures and made of a heat conductive material, wherein each flowpath of round pipeline structure being spaced with intervals then jointly covered by a heat insulation member so as to form a multiple flowpath structure.
   The round pipeline structure shown from FIG. 64 to FIG. 67 includes being made of a non-heat conductive material, and the heat insulation member can be selected to be provided or not provided according to actual needs.
(III) The rectangular pipelines or pipeline structures having similar shapes are configured by a heat conductive material, and the external thermal energy transmitting surface is a heat releasing surface or a heat gaining surface of a planar thermal energy transmitting surface (1000) or wave-shaped thermal energy transmitting surface (1001), and the means for covering the heat insulation member (109) includes one of the followings: 1) not being covered by the heat insulation member (109), 2) the exterior of the surface opposite to the thermal energy transmitting surface being covered by the heat insulation member (109), and the lateral sides also fully covered by the heat insulation member (109), 3) the exterior of the surface opposite to the thermal energy transmitting surface being covered by the heat insulation member (109), 4) the exterior of the surface opposite to the thermal energy transmitting surface being covered by the heat insulation member (109), and the lateral sides being partially covered by the heat insulation member (109); the interior thereof is configured by one or more than one of the following structures including: 1) formed with a hollow flowpath, 2) formed with a staggered semi-partition flowpath structure, 3) formed with a semi-partitioned flowpath structure at single side, and 4) forming a partitioned flowpath structure (1007);
   FIG. 68 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a hollow flowpath structure.
   FIG. 69 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a staggered semi-partitioned flowpath structure.
   FIG. 70 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a semi-partitioned flowpath structure at single side.
   FIG. 71 is a cross sectional view showing a rectangular pipeline structure (1005) made of a heat conductive material, wherein the exterior being formed as a planar thermal energy transmitting surface (1000) for being served as the heat releasing surface or heat gaining surface, and the interior being formed with a partitioned flowpath structure (1007).
   The rectangular pipeline structure having the planar thermal energy transmitting surface (1000) at the exterior for being served as the heat releasing surface or the heat gaining surface and having the partitioned flowpath structure (1007) at interior includes being configured integrally, or configured by two or more than two rectangular pipelines (1005) jointly constituted.
   In the embodiments shown from FIG. 68 to FIG. 71, when being covered by the heat insulation member (109), the locations where the heat insulation member (109) covers includes the three surfaces, except for the surface served as the thermal energy transmitting surface of the rectangular pipeline, and the heat insulation member (109) can further be used to cover the back side of the surface opposite to the thermal energy transmitting surface, or to cover both of the back side of the surface opposite to the thermal energy transmitting surface and the two lateral sides, so the two lateral sides of the rectangular pipeline can be served as the thermal energy transmitting surfaces;
   FIG. 72 is a cross sectional view showing the heat insulation member (109) covering the bottom and two lateral sides of the planar thermal energy transmitting surface (1000) of the rectangular pipeline structure shown from FIG. 68 to FIG. 71.
   As shown in FIG. 72, in the close-loop temperature equalization device, the rectangular pipeline (1005) can be further covered by the heat insulation member (109) at the exterior of the surface opposite to the thermal energy transmitting surface of the rectangular pipeline and also at two lateral sides of the rectangular pipeline (1005).
   FIG. 73 is a cross sectional view showing the heat insulation member (109) covering the back side of the surface opposite to the planar thermal energy conductive surface (1000) of the rectangular pipeline structure shown from FIG. 68 to FIG. 71.
   As shown in FIG. 73, in the close-loop temperature equalization device, the rectangular pipeline (1005) is further covered by the heat insulation member (109) at the back side of the surface opposite to the thermal energy transmitting surface of the rectangular pipeline, so the two lateral sides of the rectangular pipeline (1005) are enabled to be served as the thermal energy transmitting surfaces.
   FIG. 74 is a cross sectional view showing the heat insulation member (109) covering the back side of the surface opposite to the planar thermal energy conductive surface (1000) as well as a part of the two lateral sides of the rectangular pipeline structure shown from FIG. 68 to FIG. 71.
   As shown in FIG. 74, in the close-loop temperature equalization device, the rectangular pipeline (1005) is further covered by the heat insulation member (109) at the back side of the surface opposite to the thermal energy transmitting surface of the rectangular pipeline (1005) and at a part of the two lateral sides of the rectangular pipeline (1005), so a part of the two lateral sides of the rectangular pipeline (1005) are enabled to be served as the thermal energy transmitting surfaces.
   In the embodiments shown from FIG. 68 to FIG. 74, the heat gaining surface or the heat releasing surface providing the thermal energy transmitting function is not only in the structure of the planar thermal energy transmitting surface (1000), a wave-shaped thermal energy transmitting surface (1001) structure along the transversal cross section of the fluid flowing direction can be further provided for increasing the thermal energy transmitting effect between the fluid in the pipe and the exterior;
   FIG. 75 is a cross sectional view showing the planar thermal energy transmitting surface (1000) being further made in a wave-shaped thermal energy transmitting surface (1001) along the transversal cross section of the fluid flowing direction.
   As shown in FIG. 75, according to the close-loop temperature equalization device, the rectangular pipeline (1005) is configured by the wave-shaped thermal energy transmitting surface (1001) structure.
(IV) The round pipelines or pipeline structures having similar shapes are configured by the heat conductive material and configured by one or more than one of the round pipeline structures as followings, including: I) the interior of round pipeline (1006) being formed as a hollow structure, 2) the interior of the round pipeline (1006) being formed with a structure wherein fin sheets radially spaced with three equal angles and extending towards the center but not in contact with each other, 3) the interior of round pipeline (1006) being formed with a structure wherein fin sheets radially spaced with three equal angles and extending towards the center for being connected with each other, 4) the interior of round pipeline (1006) being formed with a structure wherein fin sheets radially spaced with two equal angles and extending towards the center for being connected with each other, and 5) the interior of round pipeline (1006) being formed with a structure wherein fin sheets radially spaced with four equal angles and extending towards the center for being connected with each other;
   FIG. 76 is a cross sectional view showing the round pipeline structure (1006) made of a heat conductive material, wherein the pipeline is in round or similar shapes and the interior being formed with a hollow structure.
   FIG. 77 is a cross sectional view showing the round pipeline structure (1006) made of a heat conductive material, wherein the pipeline is in round or similar shapes and the interior being formed with the fin-type partitioned flowpath structure (1007) wherein fin sheets radially spaced with three equal angles and extending towards the center but not in contact with each other.
   FIG. 78 is a cross sectional view showing the round pipeline structure (1006) made of a heat conductive material, wherein the pipeline is in round or similar shapes and the interior being formed with the fin-type partitioned flowpath structure (1007) wherein fin sheets radially spaced with three equal angles and extending towards the center for being connected with each other.
   FIG. 79 is a cross sectional view showing the round pipeline structure made of a heat conductive material, wherein the pipeline is in round or similar shapes and the interior being formed with the fin-type partitioned flowpath structure (1007) wherein fin sheets radially spaced with two equal angles and extending towards the center for being connected with each other.
   FIG. 80 is a cross sectional view showing the round pipeline structure made of a heat conductive material, wherein the pipeline is in round or similar shapes and the interior being formed with the fin-type partitioned flowpath structure (1007) wherein fin sheets radially spaced with four equal angles and extending towards the center for being connected with each other.
(V) The round pipelines or pipeline structures having similar shapes are configured by the heat conductive material, and the pipeline arrangement is configured by one or more than one of the pipeline arrangement means including: 1) multiple pipelines being up/down staggeredly separated, 2) multiple pipelines being up/down staggeredly separated and a connection structure being provided between the pipelines, 3) multiple pipelines being linearly and adjacently arranged, 4) multiple pipelines being linearly separated, 5) multiple pipelines being linearly separated and a connection structure being provided between the pipelines, and 6) the pipeline structures of said items 1)~5) are further covered with a grid or lattice structural body at the exterior to prevent from being plugged;

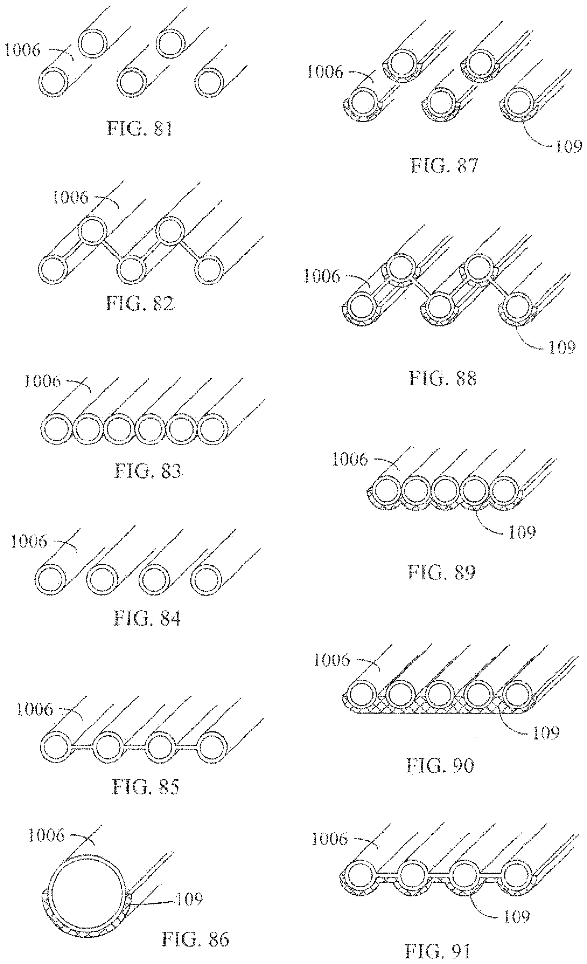

   FIG. 81 is a cross sectional view showing the multiple pipeline structure made of a heat conductive material, wherein the multiple pipelines being up/down staggeredly separated.
   FIG. 82 is a cross sectional view showing the multiple pipeline structure made of a heat conductive material, wherein the multiple pipelines being up/down staggeredly separated and having a connection device between the pipelines.
   FIG. 83 is a cross sectional view showing the multiple pipeline structure made of a heat conductive material, wherein the multiple pipelines being linearly and adjacently arranged.
   FIG. 84 is a cross sectional view showing the round pipeline structure made of a heat conductive material, wherein the multiple pipelines being linearly separated.
   FIG. 85 is a cross sectional view showing the round pipeline structure made of a heat conductive material, wherein the multiple pipelines being linearly separated and a connection structure being provided between the pipelines.
(VI) The round pipelines or pipeline structures having similar shapes are configured by the heat conductive material, and a part of the pipeline surface is served as a heat gaining surface or a heat releasing surface for transmitting thermal energy, and the other part of the pipeline surface is covered by the heat insulation member (109), and the pipeline arrangement is configured by one or more than one of the pipeline arrangement means including: 1) formed with a single pipeline structure and a part of the pipeline surface being covered by the heat insulation member (109), 2) multiple pipelines being up/down staggeredly separated and a part of the pipeline surface being covered by the heat insulation member (109), 3) multiple pipelines being up/down staggeredly separated and a connection structure being provided between the pipelines and a part of the pipeline surface being covered by the heat insulation member (109), 4) multiple pipelines being linearly and adjacently arranged and a part of the pipeline surface being covered by the heat insulation member (109), 5) multiple pipelines being linearly separated and a part of the pipeline surface being covered by the heat insulation member (109), 6) multiple pipelines being linearly separated and a connection structure being provided between the pipelines and a part of the pipeline surface being covered by the heat insulation member (109), and 7) the pipeline structures of said items 1)~6) are further covered with a grid or lattice structural body at the exterior to prevent from being plugged;
   FIG. 86 is a cross sectional view showing the pipeline structure being made of a heat conductive material and a part of the pipeline surface being exposed externally and the other part being covered by the heat insulation member (109),
   FIG. 87 is a cross sectional view showing the multiple pipeline structure made of a heat conductive material, wherein the multiple pipelines being up/down staggeredly separated, a part of each pipeline surface being exposed externally and the other part being covered by the heat insulation member (109).
   FIG. 88 is a cross sectional view showing the multiple pipeline structure made of a heat conductive material, wherein the multiple pipelines being up/down staggeredly separated and a connection structure being provided between the pipelines, a part of each pipeline surface being exposed externally and the other part being covered by the heat insulation member (109).
   FIG. 89 is a cross sectional view showing the multiple pipeline structure made of a heat conductive material, wherein the multiple pipelines being linearly and adjacently arranged, a part of each pipeline surface being exposed externally and the other part being covered by the heat insulation member (109).
   FIG. 90 is a cross sectional view showing the round pipeline structure made of a heat conductive material, wherein the multiple pipelines being linearly separated, a part of each pipeline surface being exposed externally and the other part being covered by the heat insulation member (109).
   FIG. 91 is a cross sectional view showing the round pipeline structure made of a heat conductive material, wherein the multiple pipelines being linearly separated and a connection structure being provided between the pipelines, a part of each pipeline surface being exposed externally and the other part being covered by the heat insulation member (109),
(VII) The round pipelines or pipeline structures having similar shapes are configured by a heat conductive material, the thermal energy transmitting surface is applied as the heat releasing surface of the heat releasing device (201) or the heat gaining surface of the heat gaining device (101), and the exterior thereof is installed with one or more than one of thermal conductive fin sheets (1120), and configured by one or more than one of the pipeline arrangement means including: 1) formed with a single pipeline structure, 2) multiple pipelines being up/down staggeredly separated, 3) multiple pipelines being up/down staggeredly separated and a connection structure being provided between the pipelines, 4) multiple pipelines being linearly and adjacently arranged, 5) multiple pipelines being linearly separated, 6) multiple pipelines being linearly separated and a connection structure being provided between the pipelines, and 7) the pipeline structures of said items 1)~6) are further covered with a grid or lattice structural body at the exterior to prevent from being plugged;

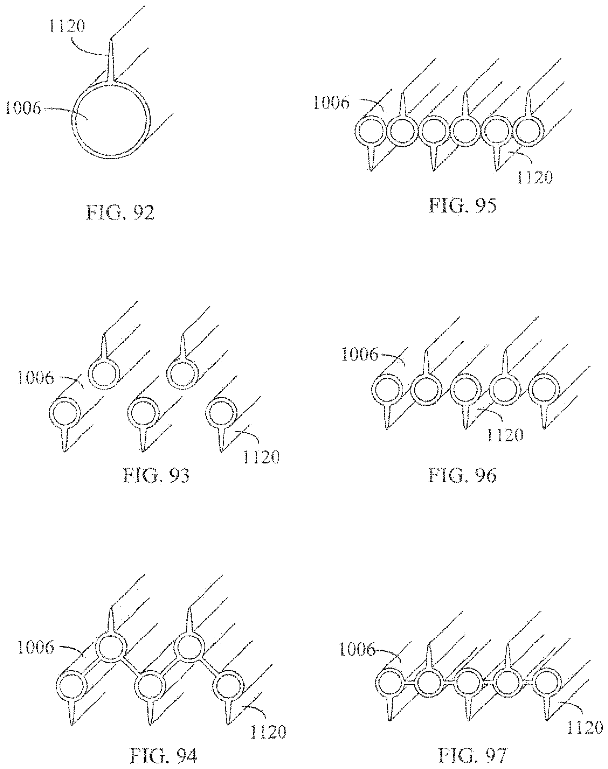

   FIG. 92 is a cross sectional view showing the single pipeline structure being made of a heat conductive material and the exterior of the thermal energy transmitting surface being installed with a thermal conductive fin sheet (1120),
   FIG. 93 is a cross sectional view showing the multiple pipeline structure made of a heat conductive material, wherein the multiple pipelines being up/down staggeredly separated and the exterior of each thermal energy transmitting surface being installed with a thermal conductive fin sheet (1120).
   FIG. 94 is a cross sectional view showing the multiple pipeline structure made of a heat conductive material, wherein the multiple pipelines being up/down staggeredly separated and having a connection structure between each pipeline and the exterior of each thermal energy transmitting surface being installed with a thermal conductive fin sheet (1120).
   FIG. 95 is a cross sectional view showing the multiple pipeline structure made of a heat conductive material, wherein the multiple pipelines being linearly and adjacently arranged and the exterior of each thermal energy transmitting surface being installed with a thermal conductive fin sheet (1120).
   FIG. 96 is a cross sectional view showing the round pipeline structure (1006) made of a heat conductive material, wherein the multiple pipelines being linearly separated and the exterior of each thermal energy transmitting surface being installed with a thermal conductive fin sheet (1120).
   FIG. 97 is a cross sectional view showing the round pipeline structure (1006) made of a heat conductive material, wherein the multiple pipelines being linearly separated and a connection structure being provided between each pipeline and the exterior of each thermal energy transmitting surface being installed with a thermal conductive fin sheet (1120).
(VIII) The rectangular pipelines or pipeline structures having similar shapes are configured by the heat conductive material, and the thermal energy transmitting surface is applied as the heat releasing surface of the heat releasing device (201) or the heat gaining surface of the heat gaining device (101), one side or more than one sides of the exterior are installed with one or more than one thermal conductive fin sheets (1120), and the interior is configured by one or more than one of the following pipeline arrangement means including: 1) formed as a hollow structure, 2) formed with a staggered semi-partitioned flowpath structure, 3) formed with a staggered semi-partitioned flowpath structure at single side, 4) formed with a partitioned flowpath structure (1007), and 5) the pipeline structures of said items 1)~4) are further covered with a grid or lattice structural body at the exterior to prevent from being plugged;

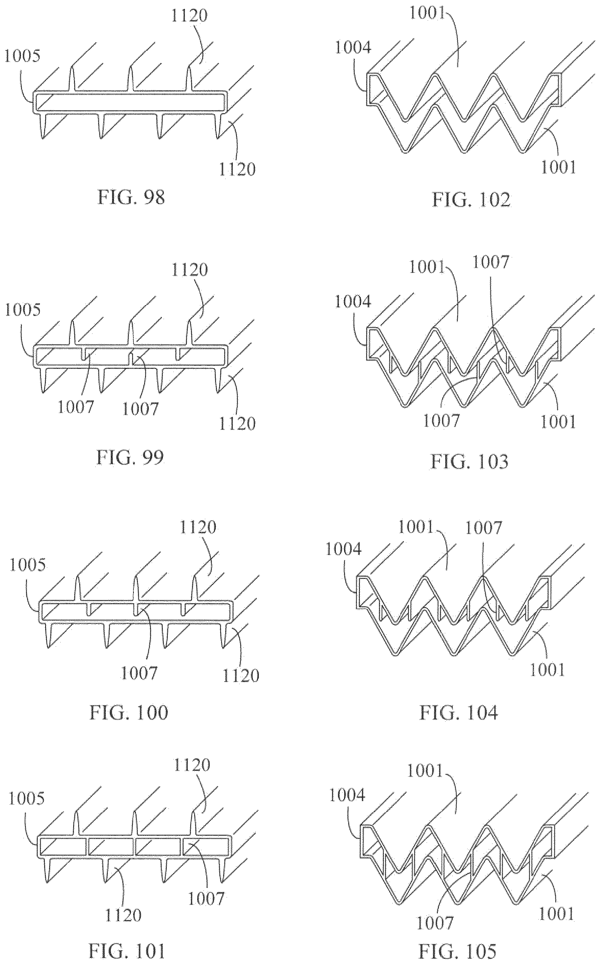

   FIG. 98 is a cross sectional view of a rectangular pipeline (1005) made of a heat conductive material, wherein the exterior of the thermal energy transmitting surface being installed with thermal conductive fin sheets (1120) and the interior thereof being hollow.
   FIG. 99 is a cross sectional view of a rectangular pipeline (1005) made of a heat conductive material, wherein the exterior of the thermal energy transmitting surface being installed with thermal conductive fin sheets (1120) and the interior thereof being formed with a staggered semi-partitioned flowpath structure.
   FIG. 100 is a cross sectional view of a rectangular pipeline (1005) made of a heat conductive material, wherein the exterior of the thermal energy transmitting surface being installed with thermal conductive fin sheets (1120) and the interior thereof being formed with a semi-partitioned flowpath structure at single side.
   FIG. 101 is a cross sectional view of a rectangular pipeline (1005) made of a heat conductive material, wherein the exterior of the thermal energy transmitting surface being installed with thermal conductive fin sheets (1120) and the interior thereof being formed with a partitioned flowpath structure (1007).
   The rectangular pipeline structure having the thermal conductive fin sheets (1120) at the exterior and having the partitioned flowpath structure (1007) at the interior includes being configured integrally, or configured by two or more than two rectangular pipelines (1005) jointly constituted.
(IX) The W-shaped pipelines or pipeline structures having similar shapes are formed with outward-bended wave-shaped thermal energy transmitting surfaces serving as heat releasing surfaces or heat gaining surfaces at the wider top and bottom surfaces thereof, and configured by a heat conductive material, and the interior is configured by one or more than one of the following pipeline arrangement means including: 1) formed as a hollow structure, 2) formed with a staggered semi-partitioned flowpath structure, 3) formed with a staggered semi-partitioned flowpath structure at single side, 4) formed with a partitioned flowpath structure (1007), and 5) the pipeline structures of said item 1)~4) are further covered with a grid or lattice structural body at the exterior to prevent from being plugged;
   FIG. 102 is a cross sectional view of a W-shaped pipeline (1004) made of a heat conductive material, wherein the wider top and bottom surfaces being formed with wave-shaped thermal energy transmitting surfaces (1001) serving as heat releasing surfaces or heat gaining surfaces and the interior thereof being formed with a hollow structure.

FIG. 103 is a cross sectional view of a W-shaped pipeline (1004) made of a heat conductive material, wherein the wider top and bottom surfaces being formed with wave-shaped thermal energy transmitting surfaces (1001) serving as heat releasing surfaces or heat gaining surfaces and the interior thereof being formed with a staggered semi-partitioned flowpath structure.

FIG. 104 is a cross sectional view of a a W-shaped pipeline (1004) made of a heat conductive material, wherein the wider top and bottom surfaces being formed with wave-shaped thermal energy transmitting surfaces (1001) serving as heat releasing surfaces or heat gaining surfaces and the interior thereof being formed with a staggered semi-partitioned flowpath structure at single side.

FIG. 105 is a cross sectional view of a W-shaped pipeline (1004) made of a heat conductive material, wherein the wider top and bottom surfaces being formed with wave-shaped thermal energy transmitting surfaces (1001) serving as heat releasing surfaces or heat gaining surfaces and the interior thereof being formed with a partitioned flowpath structure (1007).

The w-shaped pipeline structure wherein the wider top and bottom surfaces being formed with wave-shaped thermal energy transmitting surfaces serving as heat releasing surfaces or heat gaining surfaces and the interior thereof being formed with a partitioned flowpath structure (1007) includes being configured integrally, or configured by two or more than two w-shaped pipelines (1004) jointly constituted

The embodiments for illustrating each pipeline structure as shown from FIG. 60 to FIG. 105 are served as examples for the applications of the close-loop temperature equalization device, and the scope of the present invention shall not be limited thereby.

In the close-toop temperature equalization device, the geometric shape of the applied structure configured by the heat gaining device (101), the heat releasing device (201), the pipeline structure (301) and the pipeline structure (401), and the means for being installed in a natural thermal energy body as well as the means for releasing heat to the exterior are illustrated as followings:

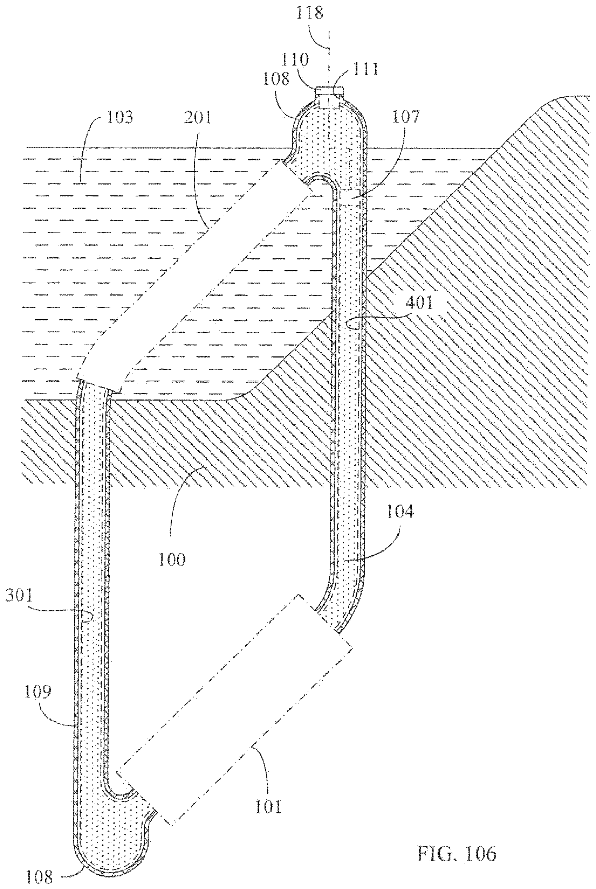

FIG. 106 is a schematic view showing the first example of the applied structure and installation means, according to the preset invention.

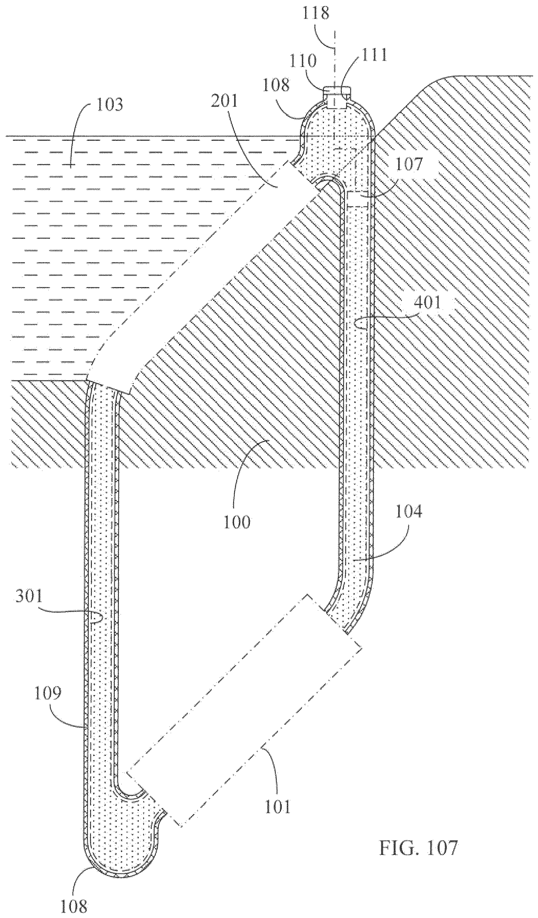

As shown in FIG. 106, in the close-loop temperature equalization device, the heat gaining device (101) is buried under the natural heat storage body (100), and the heat releasing device (201) is disposed in the water, wherein the heat releasing surface of the heat releasing device (201) releases the thermal energy to the external gaseous or liquid fluid in the omni-direction or in a selected direction, and the close-type flowpath is configured through the pipeline structure (301) and the pipeline structure (401) for allowing the heat exchange fluid (104) to flow in a closed and circulative means; wherein the auxiliary fluid pump (107) and the auxiliary heating/cooling device (115) can be optionally installed according to actual needs. FIG. 107 is a schematic view showing the second example of the applied structure and installation means, according to the preset invention.

As shown in FIG. 107, in the close-loop temperature equalization device, the heat gaining device (101) is buried under the natural heat storage body (100), and the heat releasing device (201) is installed adjacent to the shore, wherein the heat releasing surface of the heat releasing device (201) releases the thermal energy to the exterior in the omni-direction or in a selected direction, and the close-type flowpath is configured through the pipeline structure (301) and the pipeline structure (401) for allowing the heat exchange fluid (104) to flow in a closed and circulative means; wherein the auxiliary fluid pump (107) and the auxiliary heating/cooling device (115) can be optionally installed according to actual needs.

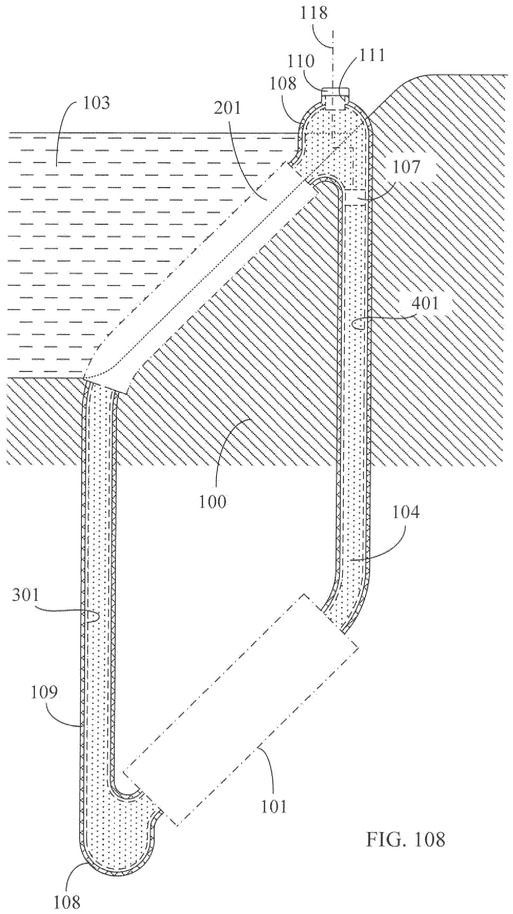

FIG. 108 is a schematic view showing the third example of the applied structures and installation means, according to the preset invention.

As shown in FIG. 108, in the close-loop temperature equalization device, the heat gaining device (101) is buried under the natural heat storage body (100), and the heat releasing device (201) is partially embedded in the shore, wherein the heat releasing surface of the heat releasing device (201) releases the thermal energy to the external gaseous or liquid fluid in the omni-direction or in a selected direction, and the close-type flowpath is configured through the pipeline structure (301) and the pipeline structure (401) for allowing the heat exchange fluid (104) to now in a closed and circulative means; wherein the auxiliary fluid pump (107) and the auxiliary heating/cooling device (115) can be optionally installed according to actual needs.

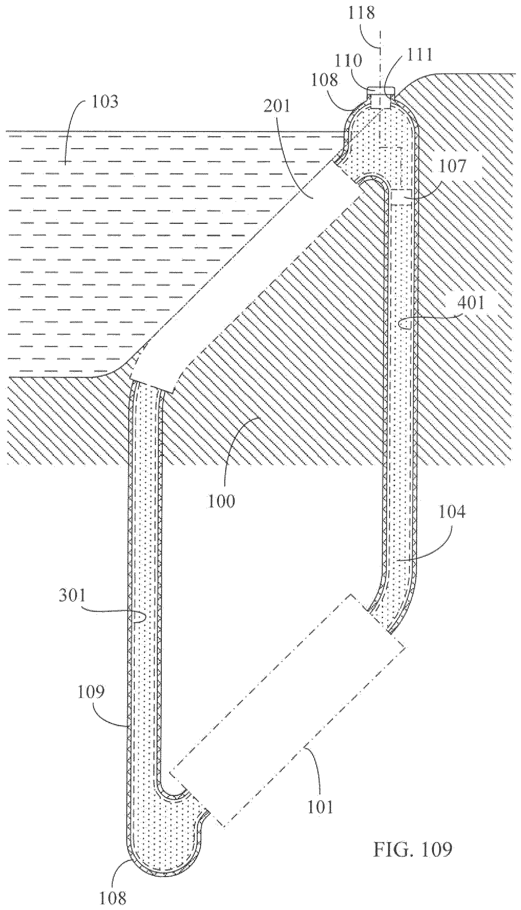

FIG. 109 is a schematic view showing the fourth example of the applied structure and installation means, according to the preset invention.

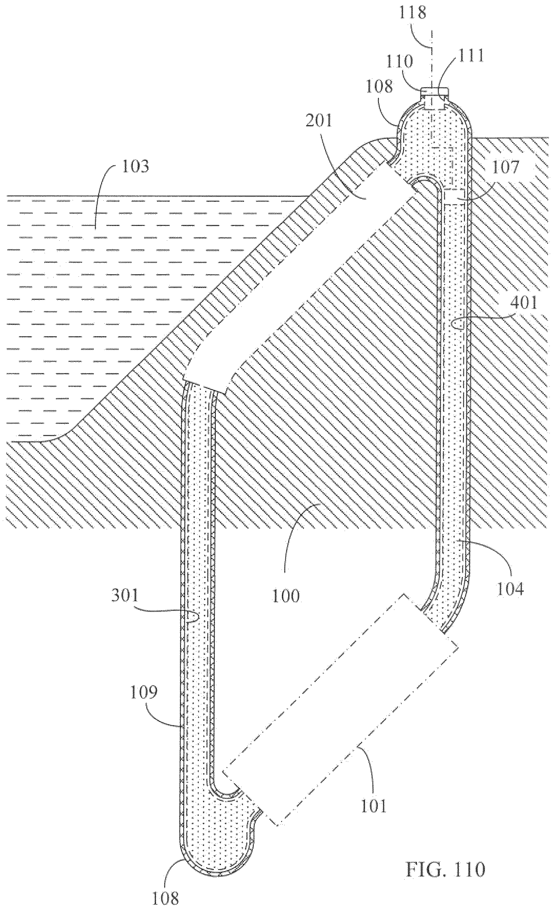

As shown in FIG. 109, in the close-loop temperature equalization device, the heat gaining device (101) is buried under the natural heat storage body (100), and the heat releasing device (201) is embedded in the shore, wherein the heat releasing surface of the heat releasing device (201) releases the thermal energy to the external gaseous or liquid fluid in the omni-direction or in a selected direction, and the close-type flowpath is configured through the pipeline structure (301) and the pipeline structure (401) for allowing the heat exchange fluid (104) to flow in a closed and cumulative means; wherein the auxiliary fluid pump (107) and the auxiliary heating/cooling device (115) can be optionally installed according to actual needs. FIG. 110 is a schematic view showing the fifth example of the applied structure and installation means, according to the preset invention.

As shown in FIG. 110, in the close-loop temperature equalization device, the heat gaining device (101) is buried under the natural heat storage body (100), and the heat releasing device (201) is embedded in the shore, wherein the heat releasing surface of the heat releasing device (201) releases the thermal energy to the external stratum in the omni-direetion or in a selected direction, and the close-type flowpath is configured through the pipeline structure (301) and the pipeline structure (401) for allowing the heat exchange fluid (104) to flow in a closed and circulative means; wherein the auxiliary fluid pump (107) and the auxiliary heating/cooling device (115) can be optionally installed according to actual needs.

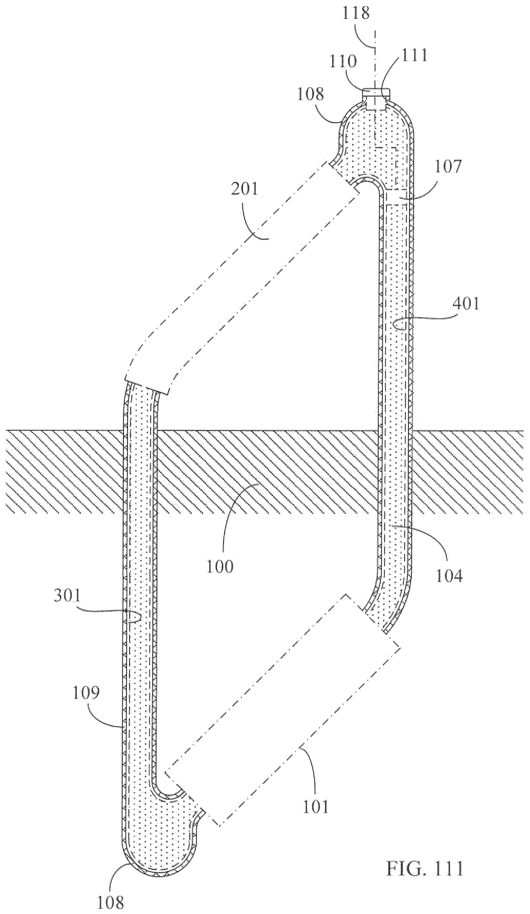

FIG. 111 is a schematic view showing the sixth example of the applied structure and installation means, according to the preset invention.

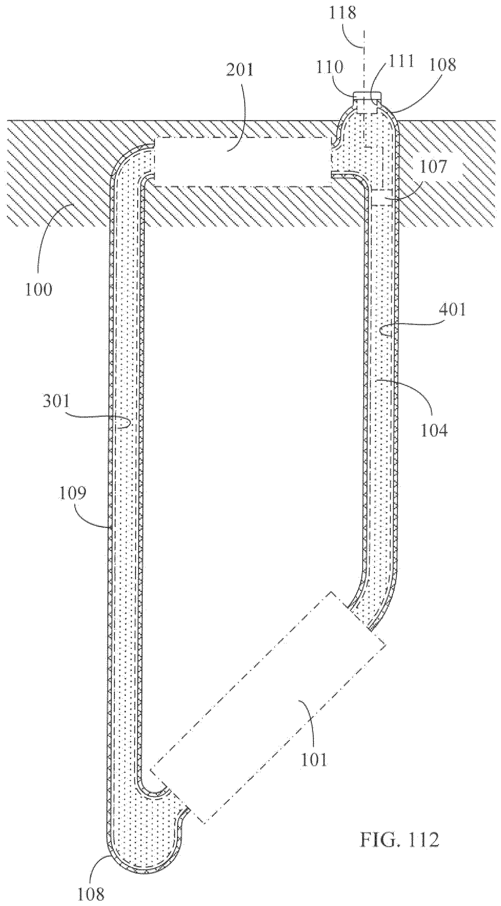

As shown in FIG. 111, in the close-loop temperature equalization device, the heat gaining device (101) is buried under the natural heat storage body (100), and the heat releasing device (201) is exposed at the top, wherein the heat releasing surface of the heat releasing device (201) releases the thermal energy to the external gaseous or liquid fluid in the omni-direction or in a selected direction, and the close-type flowpath is configured through the pipeline structure (301) and the pipeline structure (401) for allowing the heat exchange fluid (104) to flow in a closed and circulative means; wherein the auxiliary fluid pump (107) and the auxiliary heating/cooling device (115) can be optionally installed according to actual needs. FIG. 112 is a schematic view showing the seventh example of the applied structure and installation means, according to the preset invention.

As shown in FIG. 112, in the close-loop temperature equalization device, the heat gaining device (101) is inclined disposed and buried under the natural heat storage body (100), and the heat releasing device (201) is horizontally extended for being installed in the ground or exposed outside the ground or partially exposed outside the ground, wherein the heat releasing surface of the heat releasing device (201) releases the thermal energy to the exterior in the omni-direction or in a selected direction, and the close-type flowpath is configured through the pipeline structure (301) and the pipeline structure (401) for allowing the heat exchange fluid (104) to flow in a closed and circulative means; wherein the auxiliary fluid pump (107) and the auxiliary heating/cooling device (115) can be optionally installed according to actual needs.

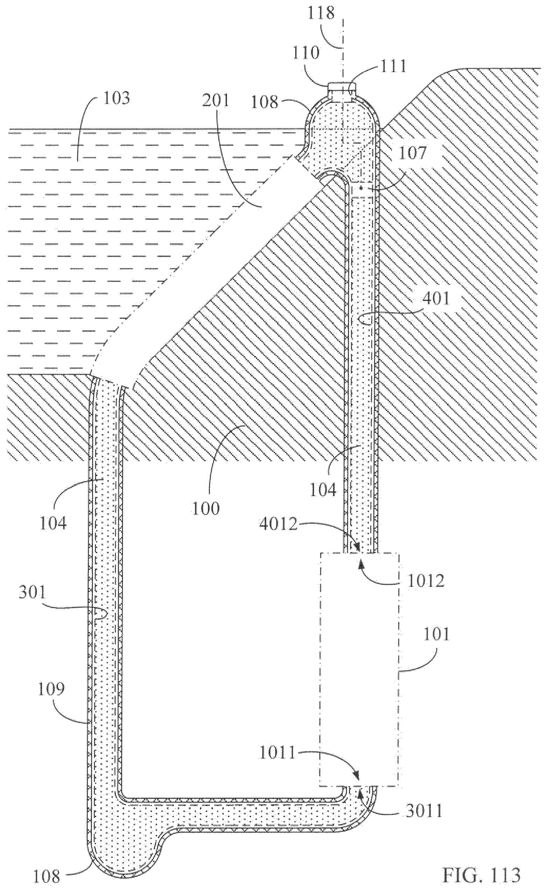

FIG. 113 is a schematic view showing the eighth example of the applied structure and installation means, according to the preset invention.

As shown in FIG. 113, in the close-loop temperature equalization device, the heat gaining device (101) is vertically disposed and buried under the natural heat storage body (100), and the heat releasing device (201) is installed in the ground or exposed outside the ground or partially exposed outside the ground, the heat gaining device (101) and the heat releasing device (201) are communicated through the vertical pipeline structure (401), the heat releasing device (201) releases the thermal energy to the external gaseous or liquid fluid in the omni-direction or in a selected direction, and passes the upward fluid inlet/outlet port (3011) of the L-shaped pipeline structure (301) provided with the outward-expanding arc-shaped fluid chamber (108) at the bottom turning location, then passes the fluid inlet/outlet port (1011) at the bottom of the heat gaining device (101), then passes to the fluid inlet/outlet port (4012) of the pipeline structure (401) through the fluid inlet/outlet port (1012) at the top of the heat gaining device (101), and passes through the pipeline structure (401) for configuring the close-type flowpath which allows the heat exchange fluid (104) to flow in a closed and circulative means; wherein the auxiliary fluid pump (107) and the auxiliary heating/cooling device (115) can be optionally installed according to actual needs.

FIG. 1 14 is a schematic view showing the ninth example of the applied structure and installation means, according to the preset invention.

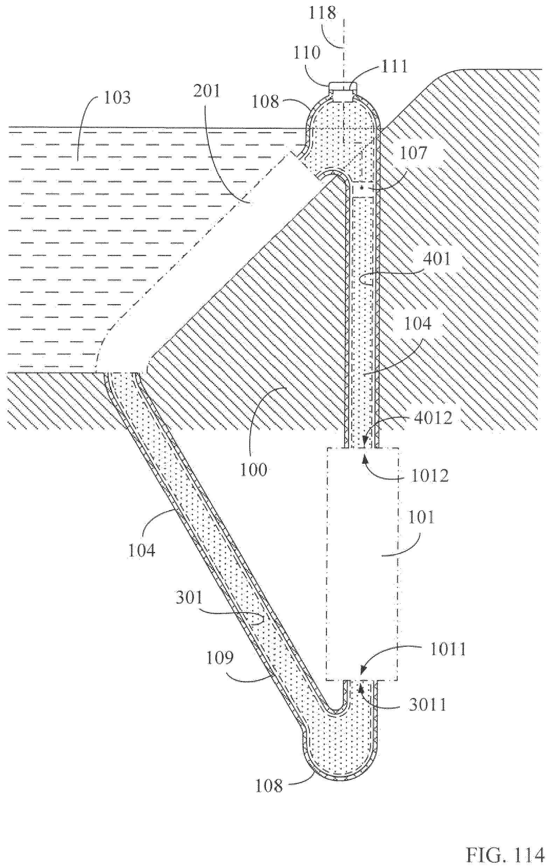

As shown in FIG. 114, in the close-loop temperature equalization device, the heat gaining device (101) is vertically disposed and buried under the natural heat storage body (100), and the heat releasing device (201) is installed in the ground or exposed outside the ground or partially exposed outside the ground, the heat gaining device (101) and the heat releasing device (201) are communicated through the vertical pipeline structure (401), the heat releasing device (201) releases the thermal energy to the external gaseous or liquid fluid in the omni-direction or in a selected direction, and downwardly extends to the fluid inlet/outlet port (3011) of the outward-expanding arc-shaped fluid chamber (108) installed at the bottom of the heat gaining device (101) through the inclined pipeline structure (301), then passes the fluid inlet/outlet port (1011) at the bottom of the heat gaining device (101), then is leaded to the fluid inlet/outlet port (4012) of the pipeline structure (401) through the fluid inlet/outlet port (1012) at the top of the heat gaining device (101), and passes through the pipeline structure (401) for configuring the close-type flowpath which allows the heat exchange fluid (104) to flow in a closed and circulative means; wherein the auxiliary fluid pump (107) and the auxiliary heating/cooling device (115) can be optionally installed according to actual needs.

The mentioned applied structures and installation means for the close-loop temperature equalization device are served as examples, the present invention can be adopted and applied under various environmental conditions based on the mentioned embodiments and related arts which can be easily understood by skilled people in the arts,

## Claims

1. A close-loop temperature equalization device, including multiple flowpaths containing a heat exchange fluid (104), comprising:
--Heat gaining device (101), for being installed in a natural heat storage body (100) and arranged to transfer heat between the natural heat storage body (100) and the heat exchange fluid (104) flowing through the close-loop temperature equalization device, in which the flowpath inside the heat gaining device (101) is inclined with respect to the horizontal, the heat gaining device (101) comprising:
a first fluid inlet/outlet port (1011) at a lower position of the heat gaining device (101) such that it allows the heat exchange fluid (104) having relatively low temperature to flow in to the heat gaining device (101), and
a second fluid inlet/outlet port (1012) at a higher position of the heat gaining device (101) such that it allows the heat exchange fluid (104) having relatively high temperature to flow out of the heat gaining device (101);
--Heat releasing device (201), in contact with a temperature differentiation body (103) and arranged to transfer heat between the heat exchange fluid (104) and the temperature differentiation body (103), the heat releasing device (201) comprising:
a third fluid inlet/outlet port (2011) arranged to allow the heat exchange fluid (104) having relatively high temperature to flow in to the heat releasing device (201), and
a fourth fluid inlet/outlet port (2012) arranged to allow the heat exchange fluid (104) having a relatively low temperature to flow out of the heat releasing device (201);
--First Pipeline structure (301), connected to the first fluid inlet/outlet port (1011) of the heat gaining device (101) and the fourth fluid inlet/outlet port (2012) of the heat releasing device (201) for transporting the heat exchange fluid (104) between the heat gaining device (101) and the heat releasing device (201);
--Second Pipeline structure (401) connected to the second fluid inlet/outlet port (1012) of the heat gaining device (101) and the third fluid inlet/outlet port (2011) of the heat releasing device (201) for transporting the heat exchange fluid (104) between the heat gaining device (101) and the heat releasing device (201); **characterised in that** the exterior of the first and second pipeline structures (301,401) being covered by a heat insulation member and the heat releasing device (201) further comprising:
--An auxiliary fluid pump (107) arranged to selectively pump the heat exchange fluid (104) through the heat gaining device (101), the heat releasing device (201), the first pipeline structure (301) and the second pipeline structure (401) in a first direction and a second direction.

2. A close-loop temperature equalization device as claimed in claim 1, wherein the heat releasing device (201) is inclined with respect to the horizontal such that the third fluid inlet/outlet port (2011) is at a higher position of the heat releasing device (201) than the fourth fluid inlet/outlet port (2012).

3. A close-loop temperature equalization device as claimed in claim 1 or 2, further comprising an outward-expanding arc-shaped fluid chamber (108) installed at an upper end of a top corner of the close-type temperature equalization device for temporally storing a part of the heat exchange fluid (104) and moderating the flow speed of the heat exchange fluid (104) having thermal energy, so as to reduce the flow damping of the flowpath of the heat exchange fluid (104).

4. A close-loop temperature equalization device as claimed in claim 3, wherein the outward-expanding arc-shaped fluid chamber (108) further comprises a top cover (112), a hinge (113), a sealing ring (114) for providing access to the pipeline structures.

5. A close-loop temperature equalization device as claimed in claim 4, further comprising a sealing plug (110) and an operation port (111) installed at the upper end of the top cover allowing the fluid to be filled in or sucked out and allowing observation and maintenance to be performed.

6. A close-loop temperature equalization device of any preceding claim, further comprising an outward-expanding arc-shaped fluid chamber (108) installed at a lower end of a bottom corner of the close-type temperature equalization device for temporally storing a part of the heat exchange fluid (104) and moderating the flow speed of the heat exchange fluid (104) having thermal energy, so as to reduce the flow damping of the flowpath of the heat exchange fluid (104).

7. A close-loop temperature equalization device as claimed in any preceding claim, further comprising at least one auxiliary heating/cooling device (115) for enhancing the thermal energy transmitted from the heat releasing device (201) to the temperature differentiation body (103).

8. A close-loop temperature equalization device as claimed in any preceding claim, further comprising a heat exchange fluid temperature detecting device (TS201), an environment temperature detecting device (TS202) and an electric power control unit (ECU200).

## Patentansprüche

1. Temperaturausgleichsvorrichtung mit geschlossenem Regelkreis, einschließlich mehrerer Strömungswege, die ein Wärmeaustauschfluid (104) enthalten, umfassend:
-- Wärmegewinnungsvorrichtung (101) zum Einbau in einen natürlichen Wärmespeicherkörper (100) und zur Übertragung von Wärme zwischen dem natürlichen Wärmespeicherkörper (100) und dem Wärmeaustauschfluid (104), das durch die Temperaturausgleichsvorrichtung mit geschlossenem Regelkreis fließt, wobei der Strömungsweg innerhalb der Wärmegewinnungsvorrichtung (101) in Bezug auf die Horizontale geneigt ist, wobei die Wärmegewinnungsvorrichtung (101) Folgendes umfasst:
eine erste Fluideinlass-/-auslassöffnung (1011) an einer unteren Position der Wärmegewinnungsvorrichtung (101), so dass das Wärmetauschfluid (104) mit relativ niedriger Temperatur in die Wärmegewinnungsvorrichtung (101) einströmen kann, und eine zweite Fluideinlass-/-auslassöffnung (1012) an einer höheren Position der Wärmegewinnungsvorrichtung (101), so dass das Wärmetauschfluid (104) mit relativ hoher Temperatur aus der Wärmegewinnungsvorrichtung (101) ausströmen kann;
-- Wärmeabgabevorrichtung (201), die mit einem Temperaturdifferenzierungskörper (103) in Kontakt steht und so angeordnet ist, dass sie Wärme zwischen dem Wärmetauschfluid (104) und dem Temperaturdifferenzierungskörper (103) überträgt, wobei die Wärmeabgabevorrichtung (201) Folgendes umfasst:
eine dritte Fluideinlass-/-auslassöffnung (2011), die so angeordnet ist, dass das Wärmetauschfluid (104) mit einer relativ hohen Temperatur in die Wärmeabgabevorrichtung (201) einströmen kann, und eine vierte Fluideinlass-/- auslassöffnung (2012), die so angeordnet ist, dass das Wärmetauschfluid (104) mit einer relativ niedrigen Temperatur aus der Wärmeabgabevorrichtung (201) ausströmen kann;
-- eine erste Rohrleitungsstruktur (301), die mit dem ersten Fluideinlass-/- auslassanschluss (1011) der Wärmegewinnungsvorrichtung (101) und dem vierten Fluideinlass-/-auslassanschluss (2012) der Wärmeabgabevorrichtung (201) verbunden ist, um das Wärmetauschfluid (104) zwischen der Wärmegewinnungsvorrichtung (101) und der Wärmeabgabevorrichtung (201) zu befördern;
-- eine zweite Rohrleitungsstruktur (401), die mit dem zweiten Fluideinlass-/- auslassanschluss (1012) der Wärmegewinnungsvorrichtung (101) und dem dritten Fluideinlass-/-auslassanschluss (2011) der Wärmeabgabevorrichtung (201) verbunden ist, um das Wärmetauschfluid (104) zwischen der Wärmegewinnungsvorrichtung (101) und der Wärmeabgabevorrichtung (201) zu befördern;
**dadurch gekennzeichnet, dass** das Äußere der ersten und zweiten Rohrleitungsstruktur (301, 401) durch ein Wärmeisolierungselement bedeckt ist und die Wärmeabgabevorrichtung (201) ferner Folgendes umfasst:
-- eine Hilfsfluidpumpe (107), die so angeordnet ist, dass sie das Wärmetauschfluid (104) selektiv durch die Wärmegewinnungsvorrichtung (101), die Wärmeabgabevorrichtung (201), die erste Rohrleitungsstruktur (301) und die zweite Rohrleitungsstruktur (401) in einer ersten Richtung und einer zweiten Richtung pumpt.

2. Temperaturausgleichsvorrichtung mit geschlossenem Regelkreis nach Anspruch 1, wobei die Wärmeabgabevorrichtung (201) in Bezug auf die Horizontale so geneigt ist, dass sich die dritte Fluideinlass-/-auslassöffnung (2011) in einer höheren Position der Wärmeabgabevorrichtung (201) befindet als die vierte Fluideinlass-/-auslassöffnung (2012).

3. Temperaturausgleichsvorrichtung mit geschlossenem Regelkreis nach Anspruch 1 oder 2, ferner umfassend eine sich nach außen erweiternde bogenförmige Fluidkammer (108), die an einem oberen Ende einer oberen Ecke der Temperaturausgleichsvorrichtung des geschlossenen Typs installiert ist, um einen Teil des Wärmetauschfluids (104) vorübergehend zu speichern und die Strömungsgeschwindigkeit des Wärmetauschfluids (104) mit thermischer Energie zu mäßigen, um so die Strömungsdämpfung des Strömungsweges des Wärmetauschfluids (104) zu reduzieren.

4. Temperaturausgleichsvorrichtung mit geschlossenem Regelkreis nach Anspruch 3, wobei die sich nach außen erweiternde bogenförmige Fluidkammer (108) ferner eine obere Abdeckung (112), ein Scharnier (113) und einen Dichtungsring (114) zur Bereitstellung eines Zugangs zu den Rohrleitungsstrukturen umfasst.

5. Temperaturausgleichsvorrichtung mit geschlossenem Regelkreis nach Anspruch 4, ferner umfassend einen Verschlussstopfen (110) und eine Betätigungsöffnung (111), die am oberen Ende der oberen Abdeckung installiert ist und das Einfüllen oder Absaugen des Fluids sowie die Beobachtung und Wartung ermöglicht.

6. Temperaturausgleichsvorrichtung mit geschlossenem Regelkreis nach einem der vorhergehenden Ansprüche, ferner umfassend eine sich nach außen erweiternde bogenförmige Fluidkammer (108), die an einem unteren Ende einer unteren Ecke der Temperaturausgleichsvorrichtung des geschlossenen Typs installiert ist, um einen Teil des Wärmetauschfluids (104) vorübergehend zu speichern und die Strömungsgeschwindigkeit des Wärmetauschfluids (104) mit thermischer Energie zu mäßigen, um so die Strömungsdämpfung des Strömungsweges des Wärmetauschfluids (104) zu reduzieren.

7. Temperaturausgleichsvorrichtung mit geschlossenem Regelkreis nach einem der vorhergehenden Ansprüche, ferner umfassend mindestens eine Hilfsheiz-/Kühlvorrichtung (115) zum Verstärken der von der Wärmeabgabevorrichtung (201) an den Temperaturdifferenzierungskörper (103) übertragenen Wärmeenergie.

8. Temperaturausgleichsvorrichtung mit geschlossenem Regelkreis nach einem der vorhergehenden Ansprüche, ferner umfassend eine Vorrichtung zum Erfassen der Temperatur eines Wärmetauschfluids (TS201), eine Vorrichtung zum Erfassen der Umgebungstemperatur (TS202) und eine elektrische Leistungssteuereinheit (ECU200).

## Revendications

1. Dispositif d'égalisation de température en boucle fermée, comprenant de multiples trajets d'écoulement contenant un fluide d'échange de chaleur (104), comprenant :
-- Un dispositif de récupération de chaleur (101), destiné à être installé dans un corps de stockage de chaleur naturelle (100) et agencé pour transférer la chaleur entre le corps de stockage de chaleur naturelle (100) et le fluide d'échange de chaleur (104) s'écoulant à travers le dispositif d'égalisation de température en boucle fermée, le trajet d'écoulement à l'intérieur du dispositif de récupération de chaleur (101) étant incliné par rapport à l'horizontale, le dispositif de récupération de chaleur (101) comprenant :
un premier orifice d'entrée/de sortie de fluide (1011) à une position inférieure du dispositif de récupération de chaleur (101) de telle sorte qu'il permet au fluide d'échange de chaleur (104) ayant une température relativement basse de s'écouler vers le dispositif de récupération de chaleur (101), et un deuxième orifice d'entrée/de sortie de fluide (1012) à une position plus élevée du dispositif de récupération de chaleur (101) de telle sorte qu'il permet au fluide d'échange de chaleur (104) ayant une température relativement élevée de s'écouler hors du dispositif de récupération de chaleur (101) ;
-- Un dispositif de libération de chaleur (201), en contact avec un corps de différenciation de température (103) et agencé pour transférer la chaleur entre le fluide d'échange de chaleur (104) et le corps de différenciation de température (103), le dispositif de libération de chaleur (201) comprenant :
un troisième orifice d'entrée/de sortie de fluide (2011) agencé pour permettre au fluide d'échange de chaleur (104) ayant une température relativement élevée de s'écouler vers le dispositif de libération de chaleur (201), et un quatrième orifice d'entrée/de sortie de fluide (2012) agencé pour permettre au fluide d'échange de chaleur (104) ayant une température relativement basse de s'écouler hors du dispositif de libération de chaleur (201) ;
-- Une première structure de canalisation (301), connectée au premier orifice d'entrée/de sortie de fluide (1011) du dispositif de récupération de chaleur (101) et au quatrième orifice d'entrée/de sortie de fluide (2012) du dispositif de libération de chaleur (201) pour transporter le fluide d'échange de chaleur (104) entre le dispositif de récupération de chaleur (101) et le dispositif de libération de chaleur (201) ;
-- Une seconde structure de canalisation (401) connectée au deuxième orifice d'entrée/de sortie de fluide (1012) du dispositif de récupération de chaleur (101) et au troisième orifice d'entrée/de sortie de fluide (2011) du dispositif de libération de chaleur (201) pour transporter le fluide d'échange de chaleur (104) entre le dispositif de récupération de chaleur (101) et le dispositif de libération de chaleur (201) ;
**caractérisé en ce que** l'extérieur des première et seconde structures de canalisation (301, 401) est recouvert par un élément d'isolation thermique et le dispositif de libération de chaleur (201) comprenant en outre :
-- Une pompe à fluide auxiliaire (107) agencée pour pomper sélectivement le fluide d'échange de chaleur (104) à travers le dispositif de récupération de chaleur (101), le dispositif de libération de chaleur (201), la première structure de canalisation (301) et la seconde structure de canalisation (401) dans une première direction et une seconde direction.

2. Dispositif d'égalisation de température en boucle fermée selon la revendication 1, dans lequel le dispositif de libération de chaleur (201) est incliné par rapport à l'horizontale de telle sorte que le troisième orifice d'entrée/de sortie de fluide (2011) se trouve à une position plus élevée du dispositif de libération de chaleur (201) que le quatrième orifice d'entrée/de sortie de fluide (2012).

3. Dispositif d'égalisation de température en boucle fermée selon la revendication 1 ou 2, comprenant en outre une chambre de fluide en forme d'arc à expansion vers l'extérieur (108) installée à une extrémité supérieure d'un coin supérieur du dispositif d'égalisation de température en boucle fermée pour stocker temporairement un partie du fluide d'échange de chaleur (104) et modérer la vitesse d'écoulement du fluide d'échange de chaleur (104) ayant de l'énergie thermique, de manière à réduire la restriction d'écoulement du trajet d'écoulement du fluide d'échange de chaleur (104).

4. Dispositif d'égalisation de température en boucle fermée selon la revendication 3, dans lequel la chambre de fluide en forme d'arc à expansion vers l'extérieur (108) comprend en outre un couvercle supérieur (112), une charnière (113) et une bague d'étanchéité (114) pour fournir un accès aux structures de canalisation.

5. Dispositif d'égalisation de température en boucle fermée selon la revendication 4, comprenant en outre un bouchon d'étanchéité (110) et un orifice de fonctionnement (111) installés à l'extrémité supérieure du couvercle supérieur permettant de remplir ou d'aspirer le fluide et d'effectuer l'observation et la maintenance.

6. Dispositif d'égalisation de température en boucle fermée selon l'une quelconque des revendications précédentes, comprenant en outre une chambre de fluide en forme d'arc à expansion vers l'extérieur (108) installée à une extrémité inférieure d'un coin inférieur du dispositif d'égalisation de température en boucle fermée pour stocker temporairement une partie du fluide d'échange de chaleur (104) et modérer la vitesse d'écoulement du fluide d'échange de chaleur (104) ayant de l'énergie thermique, de manière à réduire la restriction d'écoulement du trajet d'écoulement du fluide d'échange de chaleur (104).

7. Dispositif d'égalisation de température en boucle fermée selon l'une quelconque des revendications précédentes, comprenant en outre au moins un dispositif de chauffage/refroidissement auxiliaire (115) pour améliorer l'énergie thermique transmise du dispositif de libération de chaleur (201) au corps de différenciation de température (103).

8. Dispositif d'égalisation de température en boucle fermée selon l'une quelconque des revendications précédentes, comprenant en outre un dispositif de détection de température de fluide d'échange de chaleur (TS201), un dispositif de détection de température ambiante (TS202) et une unité de commande d'énergie électrique (ECU200).
